# EUROPEAN PATENT APPLICATION

(11) **EP 3 040 834 A1**
(43) Date of publication of application: **06.07.2016**
(21) Application number: 16150035.0
(22) Date of filing: 04.01.2016
(51) Int. Cl.: G06F 3/0482, G06F 3/0485, H04N 21/431, H04N 5/44, H04N 21/482, H04N 21/485

(54) **DISPLAY APPARATUS AND DISPLAY METHOD**

(30) Priority: 05.01.2015 KR 20150000869
(71) Applicant: Samsung Electronics Co., Ltd., Gyeonggi-do 16677 (KR)
(72) Inventor: SHIM, Da-hye, Seoul (KR); LEE, Jin-ha, Seoul (KR); LEE, Sang-joon, Chungcheongnam-do (KR)
(74) Representative: Appleyard Lees IP LLP

(57) **Abstract**

Provided are a display apparatus and a display method. The display apparatus includes: a display providing one or more item areas each of which displays at least some items of an item list that includes a plurality of items; and a controller that, when one end of an item list is displayed on an item area, in response to an input of a control apparatus to move the item list to the one end, controls the display to bounce the item list to the other end and then move the item list to the one end, and to display an item, which is arranged on the other end of the item list, on the other end of the item area.

## Description

### BACKGROUND

### Field

The present disclosure relates to display apparatuses and display methods, and more particularly, to display apparatuses that provide item areas and display methods of the display apparatuses.

### Description of the Related Art

Display apparatuses are apparatuses capable of displaying images to users. Users may watch broadcast programs by using display apparatuses. A display apparatus displays, on a display, a broadcast program corresponding to a broadcast signal selected by a user from among broadcast signals that are transmitted from broadcasting stations. The recent trend in broadcasting is a worldwide shift from analog broadcasting to digital broadcasting.

Digital broadcasting refers to the practice of transmitting a digital image and a voice signal. Digital broadcasting offers many advantages over analog broadcasting, such as robustness against noise, low data loss, ease of error correction, and the ability to provide high-definition, clear images. Also, digital broadcasting allows interactive viewer services, unlike analog broadcasting.

Also, smart TVs that have digital broadcasting functions and provide a variety of content have recently been introduced. Smart TVs do not operate passively according to users' selection, and are aimed at analyzing and providing what the users want without the users' manipulation.

Also, smart TVs that perform item scrolling functions in order to enhance interactivity with users and provide more information to the users have recently been introduced.

### SUMMARY

Provided are display apparatuses and display methods that may enable users to intuitively and naturally enjoy item areas.

Additional aspects will be set forth in part in the description which follows and, in part, will be apparent from the description, or may be learned by practice of the presented exemplary embodiments.

According to an aspect of an exemplary embodiment, a display apparatus includes: a display providing one or more item areas each of which displays at least some items of an item list that comprises a plurality of items; and a controller that, when one end of an item list is displayed on one end of an item area, in response to an input of a control apparatus to move a focus beyond the end of the item list, controls the display to bounce the item list to the other end of the item area and then move the item list to the one end of the item area, and to display an item, which is arranged on the other end of the item list, on the other end of the item area.

When the item list is bounced to the other end and then is moved to the one end of the item area, the controller may control the display to continuously display the movement of the item list.

When the item list is bounced to the other end and then is moved to the one end, the controller may control the display to display the item list so that a visual effect of continuously changing items included in the item list is applied to the item list.

The controller may apply the visual effect by continuously changing at least one of sizes, colors, transparencies, and positions of the items.

The controller may apply a focus visual effect, which has been applied in order to indicate that an item arranged on the one end of the item list displayed on the item area is focused, to an item arranged on the other end of the item list.

The display may provide a first item area and a second item area, and when one end of an item list is displayed on one end of the second item area that is not adjacent to the first item area, in response to an input of the control apparatus to move a focus beyond the one end of the item list, the controller may control the display to bounce the item list to the other end of the second item area and then move the item list to the one end of the second item area, and to display an item, which is arranged on the other end of the item list, on the other end of the second item area.

The controller may apply a focus visual effect, which has been applied in order to indicate that an item arranged on the one end of the item list displayed on the second item area is focused, to an item displayed on the first item area as the item list is bounced and then is moved.

The controller may control the display to display item lists corresponding to different categories on the first item area and the second item area.

Items of the first item area may not be activatable and items of the second item area may be activatable.

According to an aspect of another exemplary embodiment, a display method includes: providing one or more item areas each of which displays at least some items of an item list that comprises a plurality of items; and when one end of an item list is displayed on one end of an item area, in response to an input of a control apparatus to move a focus beyond the end of the item list, bouncing the item list to the other end of the item area and then moving the item list to the one end of the item area, and displaying an item, which is arranged on the other end of the item list, on the other end of the item area.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which::

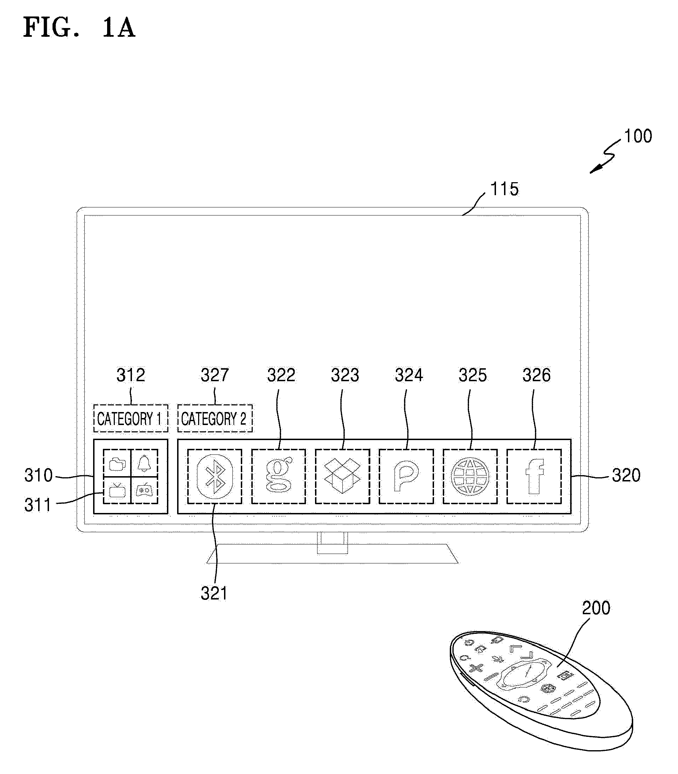

FIG. 1A is a view of a display apparatus that horizontally provides two item areas according to an exemplary embodiment;

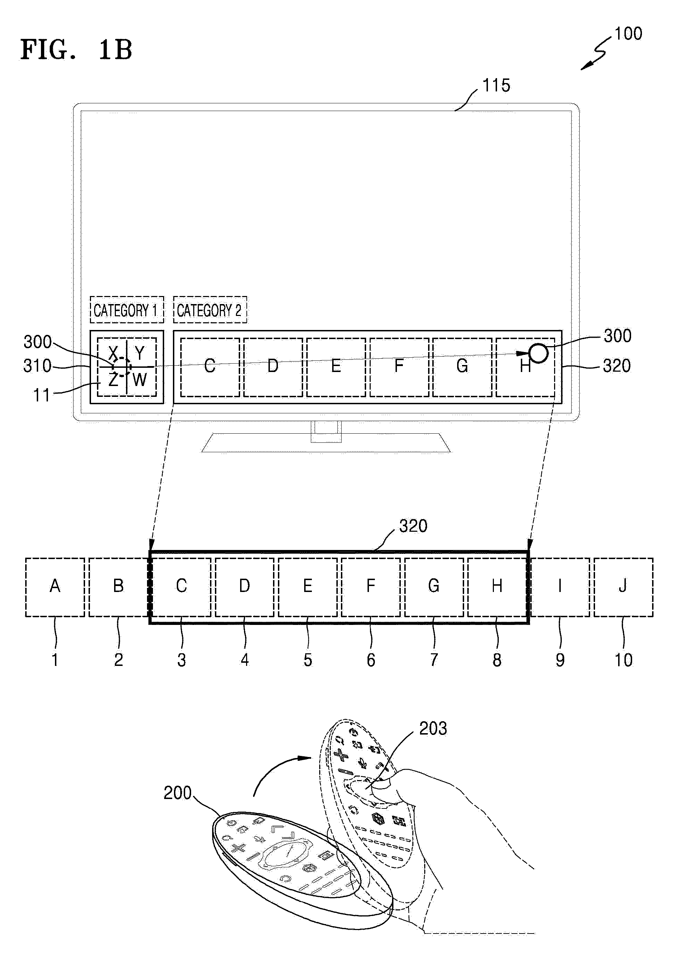

FIG. 1B is a reference view for explaining a process of controlling an item area by using a pointing device according to an exemplary embodiment;

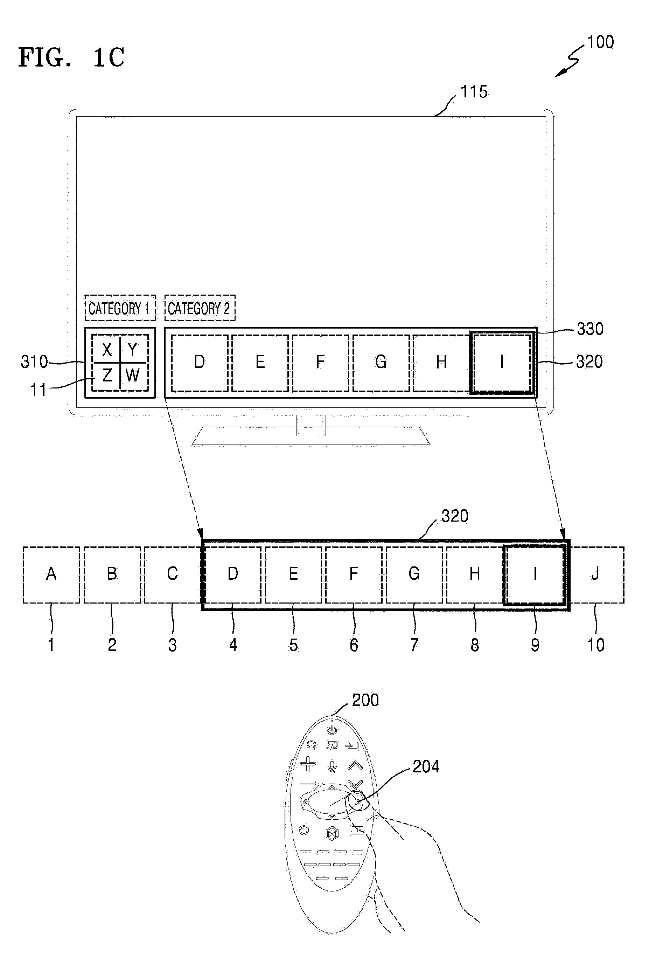

FIG. 1C is a reference view for explaining a process of controlling an item area by using a direction key according to an exemplary embodiment;

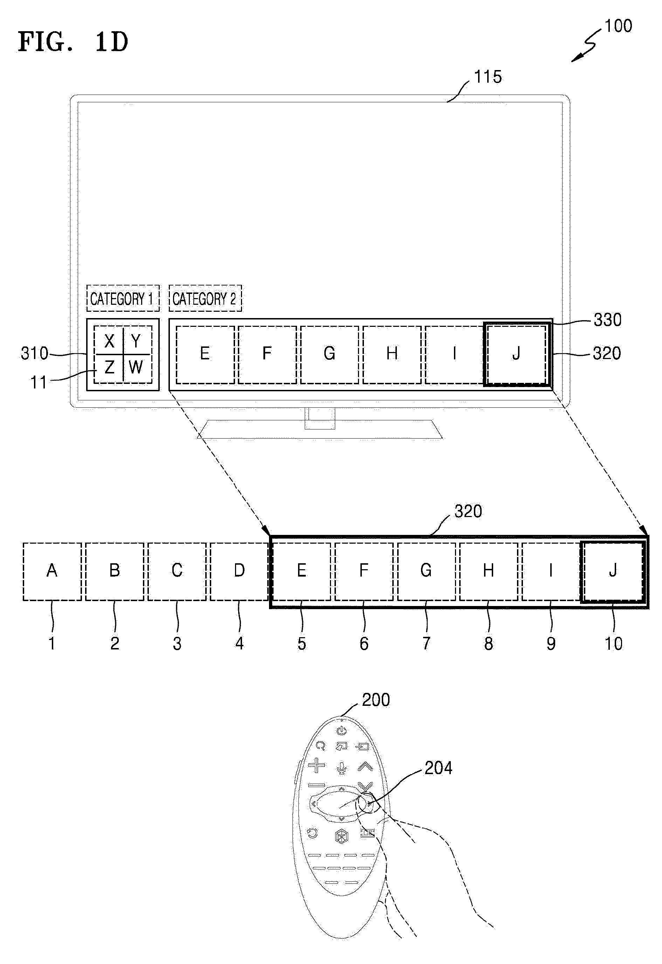

FIG. 1D is a view illustrating an example where one end of an item list reaches an item area according to an exemplary embodiment;

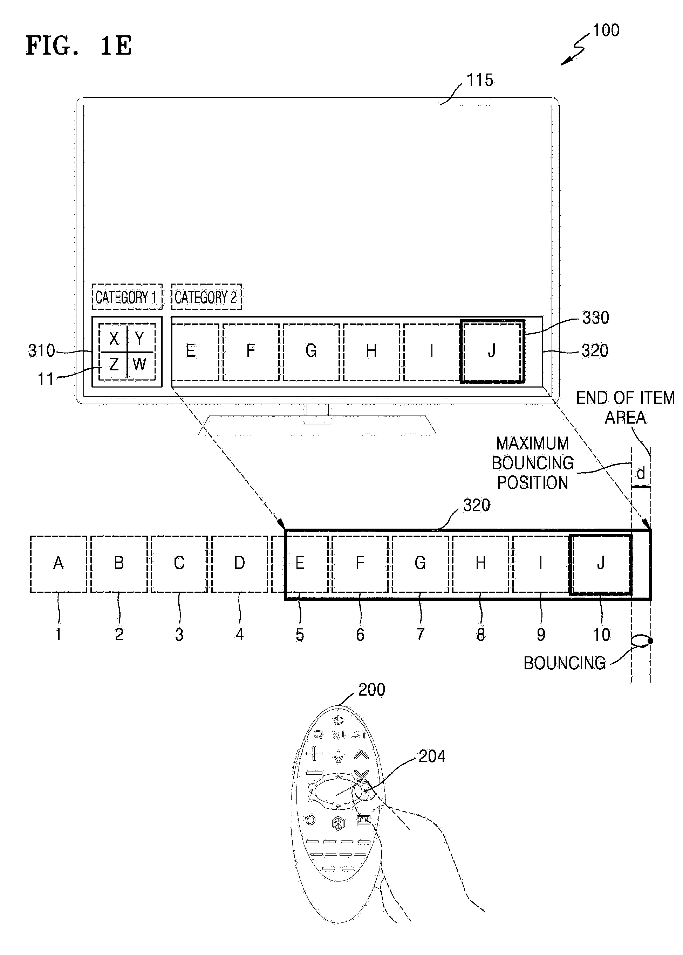

FIG. 1E is a view illustrating an example where when one end of an item list reaches an item area and an input of a direction key to move the item list to the one end is received, the item list is bounced to the other end opposite to the one end according to an exemplary embodiment;

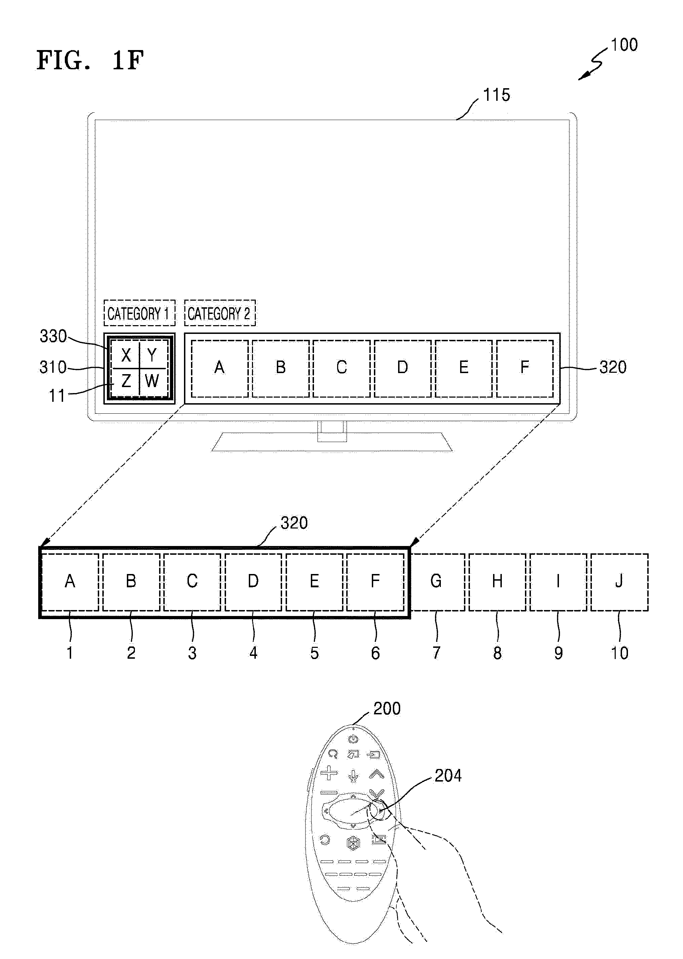

FIG. 1F is a view for explaining an example where after the item list is bounced as shown in
FIG. 1E, the item list is moved to the other end that is opposite to the one end according to an exemplary embodiment;
FIG. 1G is a view of the display apparatus that vertically provides item areas according to an exemplary embodiment;
FIG. 1H is a view of the display apparatus that provides three item areas according to an exemplary embodiment;
FIG. 1I is a view of the display apparatus that arranges and displays an advertisement item at a first position of an item list corresponding to an open item area according to an exemplary embodiment;
FIG. 2 is a block diagram of the display apparatus 100 according to an exemplary embodiment;
FIG. 3 is a detailed block diagram of the display apparatus according to an exemplary embodiment;
FIGS. 4A through 4B-c are block diagrams illustrating a configuration of a control apparatus according to an exemplary embodiment;
FIG. 5 is a flowchart of a display method of the display apparatus according to an exemplary embodiment;
FIGS. 6-a through 6-d are reference views for explaining a method of, when one end of an item list is displayed on an item area, bouncing the item list to the other end and then moving the item list to the one end according to an exemplary embodiment;
FIG. 7 shows a curve that may be used to continuously change a movement of an item list according to an exemplary embodiment;
FIGS. 8-a through 8-d are reference views for explaining a detailed method of moving and outputting an item according to a HeadPos distance according to an exemplary embodiment;
FIG. 9 shows an interpolation curve having a slope that decreases as the interpolation curve gets closer to 1;
FIGS. 10-a through 10-c are reference views for explaining the amount of deformation in an item that is scrolled;
FIGS. 11-a through 11-d are views for explaining a focus visual effect according to various exemplary embodiments;
FIGS. 12-a through 12-d are reference views for explaining an operation performed by the display apparatus that provides an open item area and a closed item area to, when the far right of an item list is displayed on the open item area and an input of a direction key to move the item list rightward is received, bounce and move the item list according to an exemplary embodiment; and
FIGS. 13-a through 13-d are reference views for explaining an operation performed by the display apparatus that provides the open item area and the closed item area to bounce and move an item list when the closed item area is focused and an input of the direction key to move the item list leftward is received according to an exemplary embodiment.

### DETAILED DESCRIPTION

Exemplary embodiments will be described more fully hereinafter with reference to the accompanying drawings. A method of configuring and using an electronic apparatus according to exemplary embodiments will be described more fully hereinafter with reference to the accompanying drawings. The same reference numerals in the drawings denote the same components or elements that perform the same functions.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of exemplary embodiments. As used herein, the term "and/or", includes any and all combinations of one or more of the associated listed items.

When a key provided in a control apparatus is selected, it may mean that the key is pressed, touched, or dragged.

The term 'content' used herein may include a video, an image, text, or a web document.

A portion of a display of a display apparatus on which actual content is output may be referred to as a screen.

The terminology used herein is for the purpose of describing exemplary embodiments only and is not intended to be limiting of exemplary embodiments. As used herein, the singular forms "a", "an", and "the" are intended to include the plural forms as well, unless the context clearly indicates otherwise. It will be further understood that the terms "comprises", "comprising", "includes", and/or "including", when used herein, specify the presence of stated features, integers, steps, operations, elements, components, and/or groups thereof but do not preclude the presence or addition of one or more other features, integers, steps, operations, elements, components, and/or groups thereof.

As used herein, the term "and/or" includes any and all combinations of one or more of the associated listed items. Expressions such as "at least one of" when preceding a list of elements, modify the entire list of elements and do not modify the individual elements of the list.

A display operation of a display apparatus according to various exemplary embodiments will now be explained with reference to FIGS. 1A through 1E.

FIG. 1A is a view of a display apparatus 100 that horizontally provides two item areas according to an exemplary embodiment.

FIG. 1A illustrates the display apparatus 100 that may communicate with a control apparatus 200 in a wired or wireless manner.

The control apparatus 200 may control the display apparatus 100 by using short-range communication such as Infrared communication or Bluetooth communication. A user may use the control apparatus 200 to control a function of the display apparatus 100 by using at least one of a key (including a button), a touchpad, a microphone (not shown) that may receive the user's voice, and a sensor that may recognize a motion of the control apparatus 200.

The control apparatus 200 includes a power on/off button for turning on or off the display apparatus 100. The control apparatus 200 may change a channel of the display apparatus 100, adjust a volume, select terrestrial broadcasting, cable broadcasting, or satellite broadcasting, or set a configuration.

The display apparatus 100 may be a flat display apparatus, a curved display apparatus having a curved screen, or a flexible display apparatus that may adjust a curvature. Examples of an output resolution of the display apparatus 100 may include high definition (HD), full HD, ultra HD, and a resolution higher than ultra HD.

The term 'user' used herein refers to a person who controls a function or an operation of the display apparatus 100 by using the control apparatus 200 and examples of the user may include a viewer, a manager, and an installer.

The display apparatus 100 may provide a plurality of item areas in order to display a plurality of item lists corresponding to a plurality of categories on a display 115. When the display apparatus 100 provides a plurality of item areas, the display apparatus 100 may provide at least some of the plurality of item areas in a closed state and at least some of the plurality of item areas in an open state in consideration of a limited display space of the display 115. An item area in a closed state may occupy only a small portion of the display space and thus may just indicate that there exists an item list corresponding to a category. An item area in an open state may occupy a large portion of the display space of the display 115 and thus items included in an item list corresponding to a category may be provided in active states.

Also, the display apparatus 100 may display a cursor 300, which responds to an input of the control apparatus 200, on the display 115.

Referring to FIG. 1A, two item areas 310 and 320 are provided on the display 115. The item area 310 may correspond to a category 1, and a text 312 indicating the category 1 may be output to a portion above the item area 310 in order to indicate that the item area 310 corresponds to the category 1. Small images 311 showing items of an item list corresponding to the category 1 may be displayed on the item area 310. Each item list includes a plurality of items. The item area 310 may be in a closed state, and an image or images of one or a very small number of items in the item list corresponding to the category 1 may be displayed on the item area 310. Hereinafter, an item area in a closed state is referred to as a closed item area. A closed item area is mostly used to indicate that there exists an item list corresponding to a category. Items may not be scrolled on a closed item area. Also, items displayed on a closed item area may not be selected or may not be activated. However, it will be understood by one of ordinary skill in the art that even items displayed on a closed item area may be selected or activated.

Scrolling is vertically or horizontally sliding text, an image, or a video across a monitor or a display of a computer or television product. Scrolling does not change a layout of text or an image but moves a user's view across what is apparently a larger image that is not wholly seen. Scrolling is often carried out on a computer by a control processing unit (CPU) or a graphics card.

The item area 320 may correspond to a category 2, and a text 327 indicating the category 2 may be output to a portion above the item area 320 in order to indicate that the item area 320 corresponds to the category 2. Items of an item list corresponding to the category 2 may be displayed on the item area 320. In FIG. 1A, items 321, 322, 323, 324, 325, and 326 are displayed on the item area 320. The item area 320 may be in an open state, and at least some items of the item list corresponding to the category 2 may be displayed on the item area 320.

Hereinafter, an item area in an open state is referred to as an open item area. Items displayed on an open item area may be selected or may be activated. Also, the user may scroll the open item area 320 by using the control apparatus 200. Also, the user may select one of the items 321 through 326 displayed on the open item area 320 by using the control apparatus 200, and thus the selected item may be changed to an active state. Content corresponding to the item in the active state may be displayed on a part or the whole of the display 115 of the display apparatus 100 and the user may use the content corresponding to the item in the active state.

In general, an item list including a plurality of items may be longer than an item area. Accordingly, the item list for the open item area 320 may be longer than the open item area 320 for displaying items, and thus only some of all items of the item list may be displayed on the open item area 320. Accordingly, when the user wants to continuously move to items of the item list that are not shown on the open item area 320, the user clicks the cursor 300 on an edge of the open item area 320 to move the open item area 320 to the edge, which is called edge scrolling. Accordingly, referring to FIG. 1A, the user may further perform scrolling on the far left of the open item area 320 by using the control apparatus 200 to display items, which are arranged at the left of the item 321, on the open item area 320. Also, the user may further perform scrolling on the far right of the open item area 320 to display items, which are arranged at the right of the item 326, on the open item area 320.

A plurality of item areas may be provided to respectively correspond to a plurality of categories.

The plurality of categories may be set in various ways.

One of the categories may include items suggested by a service provider (e.g., FEATURED).

One of the categories may include items that are recently activated by the user (e.g., RECENT).

One of the categories may include, for example, advertisement items.

One of the categories may include items (e.g., preferred channels) that are preferred by the user.

It will be understood by one of ordinary skill in the art that movie items, game items, news items, etc. may be set in various ways as categories.

Each item may indicate content. Examples of an item indicating content may include an item indicating image content such as a movie or a drama, an item indicating audio content such as music, an item indicating an application, an item indicating a broadcast channel, and an item indicating history information of content executed by the user.

A plurality of items may be displayed as images. For example, when an item indicates content about a movie or a drama, the item may be displayed as an image of a movie or drama poster. Also, when an item indicates audio content such as music, the item may be displayed as an image of a music album poster. Also, when an item indicates an application, the item may be displayed as an image of the application or a screen of the application that is executed last.

Also, when an item indicates a broadcast channel, the item may be displayed as an image of a screen that is viewed last by the user on the broadcast channel or an image of a program that is being currently broadcast. Also, when an item indicates history information of content that is executed by the user, the item may be displayed as an image of a screen that is executed last in the content.

Also, an item may indicate an interface for connecting the display apparatus 100 to an external apparatus or may indicate an external apparatus that is connected to the display apparatus 100.

For example, an item indicating an interface for connecting an external apparatus may indicate a port of an image display apparatus to which the external apparatus is connected. Examples of an item indicating an external apparatus may include an item indicating an HD multimedia interface (HDMI) port, an item indicating a component jack, an item indicating a PC port, and an item indicating a universal serial bus (USB) port. Also, an item indicating an external apparatus may be an item indicating an external apparatus that is connected to an interface.

The cursor 300 is an indicator that is used to show a position on a computer monitor or a display apparatus, in response to a text input or a pointing device, in a computing apparatus. An indicator that is used to show a position on a display in response to an input of a pointing device such as a mouse is generally called a pointer. Referring to FIG. 1A, when the user moves the control apparatus 200 over a screen of the display 115, the cursor 300 is disposed on the screen of the display 115 to correspond to a position indicated by the control apparatus 200. Referring to FIG. 1A, the cursor 300 is displayed on the screen of the display 115 to correspond to a pointing position of the control apparatus 200. Although the cursor 300 has a circular shape in FIG. 1A, it will be understood by one of ordinary skill in the art that the present exemplary embodiment is not limited thereto and the cursor 300 may have any of various other shapes.

In response to the user's input that selects the closed item area 310 corresponding to the category 1 by using the control apparatus 200, the display apparatus 100 may display the item list of the category 1 corresponding to the closed item area 310 on the open item area 320, and may display the item list of the category 2 corresponding to the open item area 320 on the closed item area 310. As such, when a plurality of item lists corresponding to a plurality of categories are provided on a limited display space, the user may effectively use the limited display space by displaying an item list of a category which the user does not want to currently operate on a closed item area so as to reduce a waste of a display portion and by displaying only an item list of a category which the user wants to currently operate on an open item area so as for the user to operate items displayed on the open item area.

Although the closed and open item areas 310 and 320 are horizontally arranged and thus item scrolling is horizontally performed on the open item area 320 in FIG. 1A, it will be understood by one of ordinary skill in the art that the closed and open item areas 310 and 320 may be vertically arranged, may be arranged on the top of the display 115, may be vertically arranged on a left portion of the display 115, or may be arranged on a central portion of the display 115. According to an exemplary embodiment, the display apparatus 100 may control items of an item area based on an input from a pointing device.

FIG. 1B is a reference view for explaining a process of controlling an item area by using a pointing device according to an exemplary embodiment.

Referring to FIG. 1B, the display apparatus 100 provides the closed item area 310 and the open item area 320. Small images of some items x, y, z, and w of the item list corresponding to the category 1 are displayed on the closed item area 310, and some items C 3, D 4, E 5, F 6, G 7, and H 8 among items A 1, B 2, C 3, D 4, E 5, F 6, G 7, H 8, I 9, and J 10 of the item list corresponding to the category 2 are displayed on the open item area 320.

Also, the display apparatus 100 may display the cursor 300 on the display 115 in response to an input of the control apparatus 200 that is a pointing device. For example, when the display apparatus 100 receives a signal indicating that the user's finger touches a touchpad 203 that is provided on a central portion of the control apparatus 200, the display apparatus 100 initializes an operation in a pointing mode and displays the cursor 300 on the display 115. When the user whose finger touches the touchpad 203 moves the control apparatus 200, a motion sensor (e.g., an acceleration sensor or a gyro sensor) that is provided in the control apparatus 200 detects the movement of the control apparatus 200 and outputs a motion sensor value corresponding to the detected movement, and a controller 280 of the control apparatus 200 controls a communicator 220 to transmit the output motion sensor value to the display apparatus 100. The display apparatus 100 may determine a position of the cursor 300 based on the motion sensor value received from the control apparatus 200 and may display the position of the cursor 300 on the display 115. Also, for example, when the touchpad 203 of the control apparatus 200 is pressed with a force in a similar manner to how a general button is pressed, a switch that is provided under the touchpad 203 may operate to select a specific item.

Also, for example, in a state where the cursor 300 reaches the far right of the open item area 320, when an input of the control apparatus 200 to move rightward is received, the display apparatus 100 may perform scrolling and may display, on the open item area 320, the item I 9 that is arranged at the right of the item H 8 currently displayed on the open item area 320. Also, for example, in a state where the cursor 300 reaches the far left of the open item area 320, when an input of the control apparatus 200 to move leftward is received, the display apparatus 100 may perform scrolling and may display, on the open item area 320, the item B 2 that is arranged at the left of the item C 3 currently displayed on the open item area 320. Also, for example, when the open item area 320 is scrolled to the far left and the item A 1 is displayed on the open item area 320, in response to an input to move the control apparatus 200 leftward, the display apparatus 100 may apply a visual effect to the closed item area 310 so that the closed item area 310 corresponding to the category 1 is focused.

According to an exemplary embodiment, the display apparatus 100 may control items of an item area based on an input of a direction key of the control apparatus 200.

FIG. 1C is a reference view for explaining a process of controlling an item area by using a direction key according to an exemplary embodiment.

Referring to FIG. 1C, the display apparatus 100 may select, move, or scroll items displayed on the open item area 320 based on an input of a direction key that is provided on the control apparatus 200.

According to an exemplary embodiment, when an input of the direction key provided on the control apparatus 200 from the user is first detected, the display apparatus 100 may initialize an operation for controlling items according to the input of the direction key and may display the item list so that a visual effect for indicating that a specific item is focused according to a preset algorithm is applied to the specific item. For example, when an input of the direction key provided on the control apparatus 200 is first received, the display apparatus 100 may display the item list so that a focus visual effect is applied to a first item displayed on the closed item area 310.

According to an exemplary embodiment, the focus visual effect may include an effect of surrounding an edge of a focused item with a thick heavy line.

According to an exemplary embodiment, the focus visual effect may include an effect of making different a color or a transparency of a focused item.

According to an exemplary embodiment the focus visual effect may include an effect of making different a size of a focused item.

According to an exemplary embodiment, the focus visual effect may include an effect of displaying the item list so that an interval between a focused item and an item adjacent to the focused item is different from an interval between other items.

According to an exemplary embodiment, in a state where a specific item is focused, when an input of the direction key provided on the control apparatus 200 is detected, the display apparatus 100 may display the item list so that a focus visual effect is applied to an item, which is adjacent to the focused specific item, corresponding to the input of the direction key.

For example, in a state where the item D 4 is focused, when an input of the direction key to move the item list rightward is received from the control apparatus 200, the display apparatus 100 may display the item list so that a focus visual effect, which has been applied to the item D 4, is applied to the item E 5 that is arranged at the right of the item D 4.

For example, in a state where the item D 4 is focused, when an input of the direction key to move the item list leftward is received from the control apparatus 200, the display apparatus 100 may perform scrolling to display the item C 3 on the open item area 320 and may display the item list so that a focus visual effect, which has been applied to the item D 4, is applied to the item C 3 that is arranged at the left of the item D 4.

For example, in a state where scrolling is performed to the far left of the item area 320 and the item A 1 is displayed and focused on the open item area 320, when an input of the direction key to move the item list leftward is received from the control apparatus 200, the display apparatus 100 may display the item list so that a focus visual effect, which has been applied to the item A 1, is applied to the item xyzw 11 of the closed item area 310 corresponding to the category 1 which is arranged at the left of the item A 1.

For example, in a state where the item I 9 is focused as shown in FIG. 1C, when an input of the direction key to move the item list rightward is received from the control apparatus 200, the display apparatus 100 may perform scrolling to display the item J 10 on the open item area 320 and may display the item list so that a focus visual effect 330, which has been applied to the item I 9, is applied to the item J 10 that is arranged at the right of the item I 9.

FIG. 1D is a view illustrating an example where one end of an item list reaches an item area according to an exemplary embodiment.

Referring to FIG. 1D, the item j 10 that is a rightmost item of the item list is displayed on the open item area 320 and thus it is indicated that the far right of the item list reaches a right edge of the open item area 320.

In a state where the far right of the item list reaches the open item area 320 as shown in FIG. 1D, when an input of the direction key to move the item list rightward is received again from the control apparatus 200, the display apparatus 100 may move the item list rightward and may display the item list on the open item area 320 so that the far left of the item list is displayed on the open item area 320. In this case, the display apparatus 100 may bounce the item list leftward before moving the item list rightward.

FIG. 1E is a view illustrating an example where when one end of an item list reaches an item area and an input of the direction key to move the item list to the one end is received, the item list is bounced to the other end opposite to the one end according to an exemplary embodiment.

Referring to FIG. 1E, the item list displayed on the open item area 320 is displayed so that the item list is bounced leftward by a distance 'd' from one end of the open item area 320 to a bounce position of the open item area 320, when compared to that in FIG. 1D.

When an item is bounced, it means that the item list whose end reaches an end of an item area is moved to a bounce position and then is returned from the bounce position to the end of the item area.

According to an exemplary embodiment, the display apparatus 100 may continuously display on the display 115 that the item list that reaches one end of the open item area 320 as shown in FIG. 1D is moved leftward from the one end of the open item area 320 to a bounce position as shown in FIG. 1E, and then is moved to the one end of the open item area 320.

FIG. 1F is a view for explaining an example where after the item list is bounced as shown in FIG. 1E, the item list is moved to the other end that is opposite to the one end according to an exemplary embodiment.

After the bouncing of the item list is completed as shown in FIG. 1E, the display apparatus 100 may move the item list rightward and may display the item list so that a head of the item list is displayed on the open item area 320. That is, the item A 1 that is a leftmost item of the item list may be displayed on a left edge of the open item area 320 as shown in FIG. 1F.

According to an exemplary embodiment, for a period of time from when the bouncing of the item list is completed to when the item list is moved rightward, the display apparatus 100 may continuously display the movement of the item list on the display 115.

According to an exemplary embodiment, when the movement of the item list is completed, the display apparatus 100 may display the item list so that the focus visual effect 330 is applied to the closed item area 310 corresponding to the category 1.

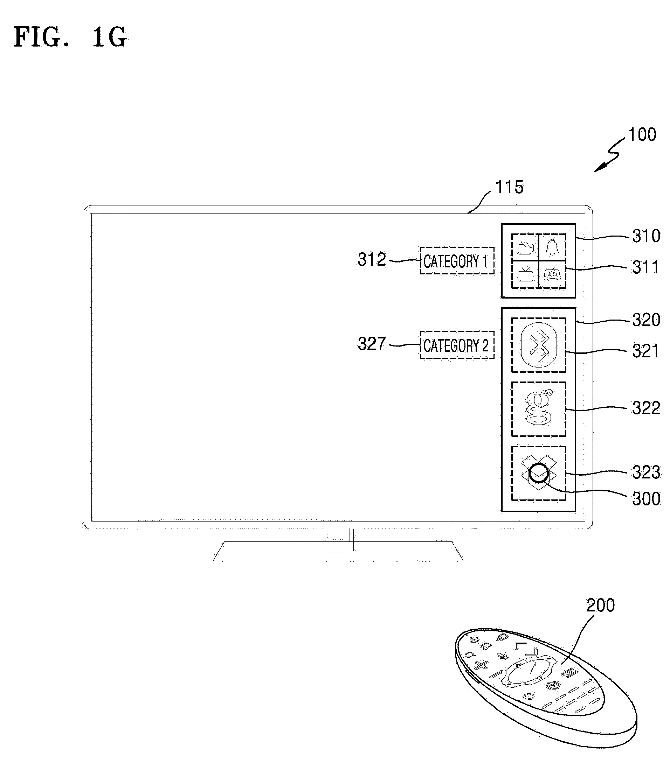

FIG. 1G is a view of the display apparatus 100 that vertically provides item areas according to an exemplary embodiment.

Referring to FIG. 1G, the closed item area 310 corresponding to the category 1 is arranged on the top right of the screen of the display 115, and the small images 311 of some items of the item list corresponding to the closed item area 310 are displayed on the closed item area 310.

The open item area 320 corresponding to the category 2 is arranged on a right portion of the display 115 to be disposed under the closed item area 310, and the items 321, 322, and 323 are displayed on the open item area 320.

In response to the user's input that selects the closed item area 310 corresponding to the category 1 by using the control apparatus 200, the display apparatus 100 may display the item list of the category 1 corresponding to the closed item area 310 on the open item area 320, and may display the item list of the category 2 corresponding to the open item area 3250 on the closed item area 310.

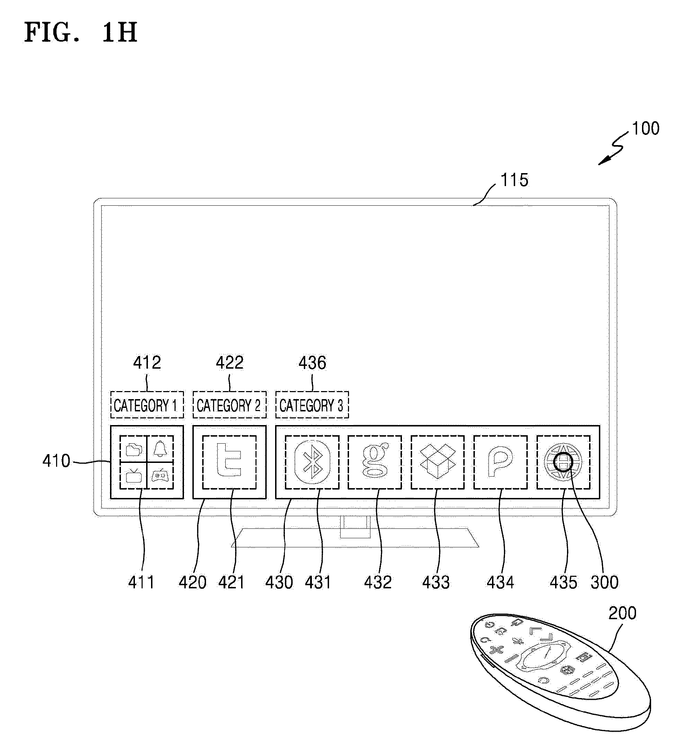

FIG. 1H is a view of the display apparatus 100 that provides three item areas according to an exemplary embodiment.

Referring to FIG. 1H, the display apparatus 100 provides an item area 410 corresponding to a category 1, an item area 420 corresponding to a category 2, and an item area 430 corresponding to a category 3. A text 412 for indicating that the item area 410 corresponds to the category 1 is displayed on a portion above the item area 410, and small images 411 of some items of an item list of the category 1 are displayed on the item area 410. A text 422 for indicating that the item area 420 corresponds to the category 2 is displayed on a portion above the item area 420, and an item 421 is displayed on the item area 420. A text 436 for indicating that the item area 430 corresponds to the category 3 is displayed on a portion above the item area 430, and items 431, 432, 433, 434, and 435 are displayed on the item area 430.

The item area 410 corresponding to the category 1 and the item area 420 corresponding to the category 2 are in closed states, and items may not be scrolled, selected, and activated on the closed item area 410 and the closed item area 420.

The item area 430 corresponding to the category 3 is in an open state, and the items 431, 432, 433, 434, and 435 are displayed and may be scrolled by using the control apparatus 220 and may be selected and activated on the open item area 430.

According to an exemplary embodiment, in response to the user's input that selects the closed item area 410 corresponding to the category 1 by using the control apparatus 200, the display apparatus 100 may display an item list corresponding to the closed item area 410 on the open item area 430, and may display an item list corresponding to the open item area 430 on the closed item area 410. The closed item area 420 during this time may remain in the closed state without being changed.

According to an exemplary embodiment, in response to the user's input that selects the closed item area 420 corresponding to the category 2 by using the control apparatus 200, the display apparatus 100 may display an item list corresponding to the closed item area 420 on the open item area 430 and may display the item list corresponding to the open item area 430 on the closed item area 420. The closed item area 410 during this time may remain in the closed state without being changed.

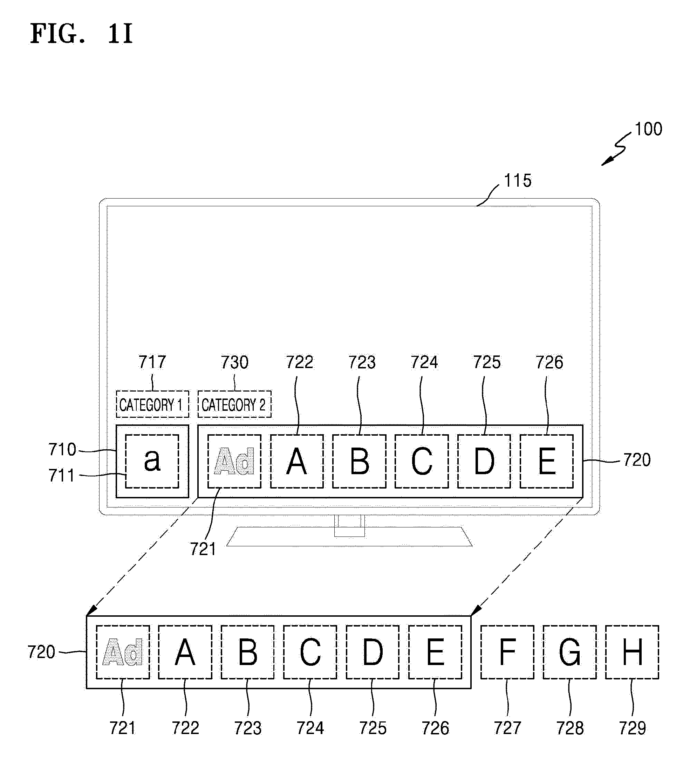

FIG. 1I is a view of the display apparatus 100 that arranges and displays an advertisement item at a first position of an item list corresponding to an open item area according to an exemplary embodiment.

Referring to FIG. 1I, the display apparatus 100 provides a closed item area 710 and an open item area 720.

An item list of a category 1 717 corresponds to the closed item area 710, and an item a 711 of the item list is displayed on the closed item area 710.

An item list corresponding to a category 2 730 may be displayed on the open item area 720.

The item list includes an advertisement item 721 and items A 722, B 723, C 724, D 725, E 726, F 727, G 728, and H 729, and the advertisement item 721 and the items A 722, B 723, C 724, D 725, and E 726 are displayed on the open item area 720.

The advertisement item 721 may not have an attribute that is common to other items included in the category 2, and may be provided to be displayed at a first position or another fixed position of the open item area 720 in order to provide service. Accordingly, when the user's input that selects the closed item area 710 when the category 1 corresponds to the closed item area 710 and the category 2 corresponds to the open item area 720 in FIG. 1I is input, the display apparatus 100 may display the item list corresponding to the category 1 on the open item area 720. Even in this case, the display apparatus 100 may display the advertisement item 721 at a first position among items displayed on the open item area 720.

As described with reference to FIGS. 1A through 1I, the display apparatus 100 may provide a plurality of item areas to the display 115, and may provide at least one of the plurality of item areas in an open state and may provide at least one of the plurality of item areas in a closed state.

According to an exemplary embodiment, in response to an input of the control apparatus 200 that selects a closed item area, the display apparatus 100 may control the display 115 to display an item list corresponding to the closed item area on an open item area and to display an item list corresponding to the open item area on the closed item area. As such, since a plurality of item areas and item lists of categories respectively corresponding to the plurality of item areas are provided and each item list is switched between an open state and a closed state, items may be effectively provided in various ways to the user and the user may naturally and pleasantly enjoy interfaces.

Also, according to an exemplary embodiment, when one end of an item list is displayed on an open item area, in response to an input of the control apparatus 200 to move the item list to the one end, the display apparatus 100 may bounce the item list to the other end and then move again the item list to the one end and may display an item, which is arranged on the other end of the item list, on the other end of the open item area.

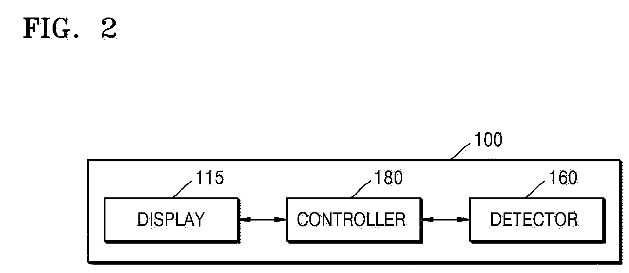

FIG. 2 is a block diagram of the display apparatus 100 according to an exemplary embodiment.

Referring to FIG. 2, the display apparatus 100 includes the display 115, a controller 180, and a detector 160.

The display 115 according to an exemplary embodiment outputs the cursor 300 to the screen in response to an input of the control apparatus 200 under the control of the controller 180.

The display 115 according to an exemplary embodiment provides an item area on which a plurality of items are arranged on the screen.

When one end of an item list is displayed on an item area, in response to an input of the control apparatus 200 to move the item list to the one end, the display 115 according to an exemplary embodiment may bounce the item list to the other end and then move again the item list to the one end and may display an item, which is arranged on the other end of the item list, on the other end of the item area, under the control of the controller 180.

When the item list is bounced to the other end and then is moved to the one end, the display 115 according to an exemplary embodiment may continuously display the movement of the item list under the control of the controller 180.

When the item list is bounced to the other end and then is moved to the one end, the display 115 according to an exemplary embodiment may display the item list so that a visual effect of continuously changing items included in the item list is applied to the item list under the control of the controller 180.

The controller 180 may receive a signal corresponding to a pointing position of the control apparatus 200 that is received through the detector 160, and may control the display 115 to determine and display a shape and a position of the cursor 300 according to the signal corresponding to the pointing position.

In response to an input of the direction key of the control apparatus 200 that is received through the detector 160, the controller 180 may control the display 115 to display the item list so that an item is focused to correspond to a direction of the direction key.

When one end of an item list is displayed on an item area, in response to an input of the control apparatus received through the detector 160 to move the item list to the one end, the controller 180 may control the display 115 to bounce the item list to the other end and then move the item list to the one end and to display an item, which is arranged on the other end of the item list, on the other end of the item area.

When the item list is bounced to the other end and then is moved to the one end, the controller 180 may control the display 115 to continuously display the movement of the item list.

When the item list is bounced to the other end and then is moved to the one end, the controller 180 may display the item list so that a visual effect of continuously changing items included in the item list is applied to the item list.

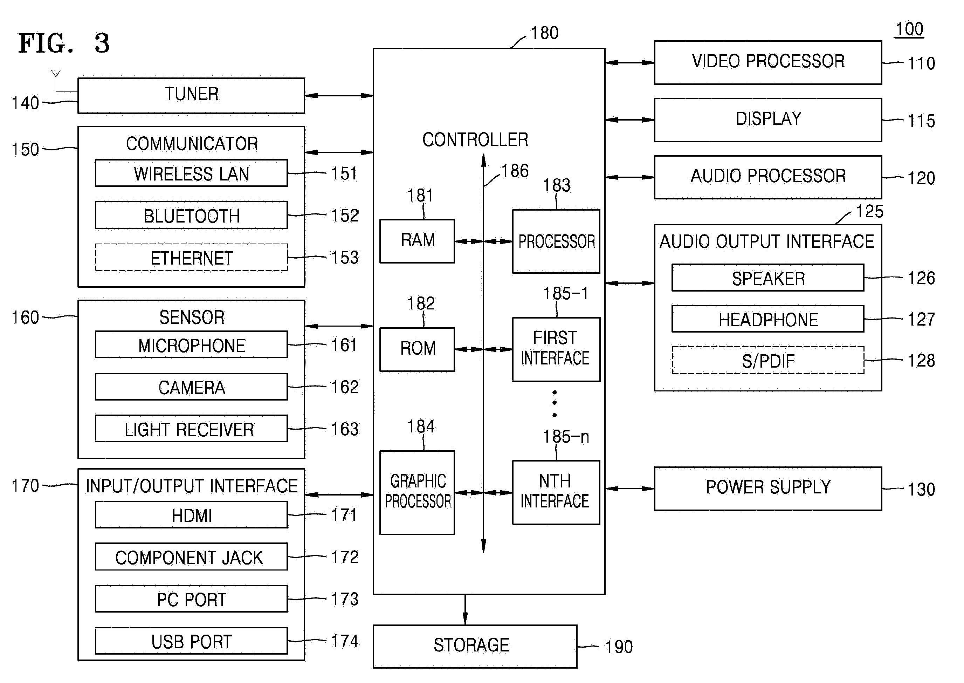

FIG. 3 is a detailed block diagram of the display apparatus 100 according to an exemplary embodiment.

Referring to FIG. 3, the display apparatus 100 includes a video processor 110, the display 115, an audio processor 120, an audio output interface 125, a power supply 130, a tuner 140, a communicator 150, the detector 160, an input/output interface 170, the controller 180, and a storage 190.

The video processor 110 processes video data that is received by the display apparatus 100.

The video processor 110 may perform various image processing such as decoding, scaling, noise filtering, frame rate conversion, or resolution conversion on the video data.

The display 115 displays, on the screen, a video included in a broadcast signal that is received through the tuner 140 under the control of the controller 180. Also, the display 115 may display content (e.g., a moving image) that is input through the communicator 150 or the input/output interface 170. The display 115 may output an image that is stored in the storage 190 under the control of the controller 180. Also, the display 115 may display a voice user interface (UI) (including a voice command guide) for performing a voice recognition task corresponding to voice recognition or a motion UI (including a user motion guide) for performing a motion recognition task corresponding to motion recognition.

The display 115 according to an exemplary embodiment may display the cursor 300 on the screen in response to an input according to a pointing mode of the control apparatus 200 under the control of the controller 180.

The display 115 according to an exemplary embodiment may display a focus visual effect on an item in response to an input according to a direction key mode of the control apparatus 200 under the control of the controller 180.

When one end of an item list is displayed on an item area, in response to an input of the control apparatus 200 to move the item list to the one end, the display 115 according to an exemplary embodiment may bounce the item list to the other end and then move the item list to the one end and may display an item, which is arranged on the other end of the item list, on the other end of the item area, under the control of the controller 180.

When the item list is bounced to the other end and then is moved to the one end, the display 115 according to an exemplary embodiment may continuously display the movement of the item list, under the control of the controller 180.

When the item list is bounced to the other end and then is moved to the one end, the display 115 according to an exemplary embodiment may display the item list so that a visual effect of continuously changing items included in the item list is applied to the item list, under the control of the controller 180.

The display 115 according to an exemplary embodiment may apply a visual effect by continuously changing at least one of sizes, colors, transparencies, and positions of the items, under the control of the controller 180.

The display 115 according to an exemplary embodiment may apply a focus visual effect, which has been applied in order to indicate that an item arranged on one end of the item list displayed on the item area is focused, to an item arranged on the other end of the item list as the item list is bounced and then is moved, under the control of the controller 180.

The display 115 according to an exemplary embodiment may provide a first item are and a second item area, and may display the item list so that a focus visual effect, which has been applied in order to indicate that an item arranged on one end of the item list displayed on the second item area is focused, is applied to an item displayed on the first item area, under the control of the controller 180.

The display 115 according to an exemplary embodiment may provide a plurality of item areas each of which displays at least one item, and may provide at least one item area of the plurality of item areas in a closed state and may provide at least one item area of the plurality of item areas in an open state, under the control of the controller 180.

In response to an input of the control apparatus 200 that selects a closed item area, the display 115 according to an exemplary embodiment may display at least some items of an item list corresponding to the closed item area on an open item area and may display at least some items of an item list corresponding to the open item area on the closed item area, under the control of the controller 180.

The audio processor 120 processes audio data. The audio processor 120 may perform various processing such as decoding, amplification, or noise filtering on the audio data. The audio processor 120 may include a plurality of audio processing modules in order to process audios corresponding to a plurality of pieces of content.

The audio output interface 125 outputs an audio included in a broadcast signal that is received through the tuner 140 under the control of the controller 180. The audio output interface 125 may output an audio (e.g., a voice or a sound) that is input through the communicator 150 or the input/output interface 170. Also, the audio output interface 125 may output an audio that is stored in the storage 190 under the control of the controller 180. The audio output interface 125 may include at least one of a speaker 126, a headphone output terminal 127, and a Sony/Philips digital interface (S/PDIF) output terminal 128. Alternatively, the audio output interface 125 may include a combination of the speaker 126, the head phone output terminal 127, and the S/PDIF output terminal 128.

The power supply 130 supplies power that is input from an external power supply source to elements (i.e., 110 through 190) of the display apparatus 100 under the control of the controller 180. Also, the power supply 130 may supply power that is output from one or more batteries (not shown) provided in the display apparatus 100 to the elements 110 through 190 under the control of the controller 180.

The tuner 140 may tune and select only a frequency of a channel to be received by the display apparatus 100 from among propagation components by performing amplification, mixing, or resonance on a broadcast signal that is received in a wired or wireless manner. The broadcast signal includes an audio, a video, and additional information (e.g., an electronic program guide (EPG)).

The tuner 140 may receive a broadcast signal in a frequency band corresponding to a channel number (e.g., a cable broadcast channel 506) according to the user's input (e.g., a control signal that is received from the control apparatus 200, for example, a channel number input, a channel up-down input, or a channel input on an EPG screen).

The tuner 140 may receive a broadcast signal from any of various sources such as a terrestrial broadcast source, a cable broadcast source, a satellite broadcast source, or an Internet broadcast source. The tuner 140 may receive a broadcast signal from a source such as analog broadcasting or digital broadcasting. The broadcast signal that is received by the tuner 140 is decoded by using, for example, audio decoding, video decoding, or additional information decoding, and is separated into an audio, a video, and/or additional information. The separated audio, video, and/or additional information may be stored in the storage 190 under the control of the controller 180.

The display apparatus 100 may include one or more tuners 140. When the display apparatus 100 includes a plurality of the tuners 140 according to an exemplary embodiment, the display apparatus 100 may output a plurality of broadcast signals to a plurality of windows constituting a multi-window screen that is provided on the display 115.

The tuner 140 may be integrated into the display apparatus 100 in an all-in-one manner, or may be connected to a separate apparatus (e.g., a set-top box (not shown) that is electrically connected to the display apparatus 100 or to the input/output interface 170.

The communicator 150 may connect the display apparatus 100 to an external apparatus (e.g., an audio apparatus) under the control of the controller 180. The controller 180 may transmit/receive content to/from the external apparatus that is connected to the controller 180 through the communicator 150, may download an application from the external apparatus, or may perform web browsing. The communicator 150 may include one of a wireless local area network (LAN) 151, a Bluetooth system 152, and a wired Ethernet system 153 according to a performance and a structure of the display apparatus 100. Alternatively, the communicator 150 may include a combination of the wireless LAN 151, the Bluetooth system 152, and the wired Ethernet system 153. The communicator 150 may receive a control signal of the control apparatus 200 under the control of the controller 180. The control signal may be a Bluetooth signal, an RF signal, or a WiFi signal.

The communicator 150 may further include a short-range communication system (e.g., a near-field communication (NFC) system (not shown) or a Bluetooth low energy (BLE) system (not shown)) other than the Bluetooth system 152.

The detector 160 detects the user's voice, image, or interaction.

The microphone 161 receives the user's uttered voice. The microphone 161 may convert the received voice into an electrical signal and may output the electrical signal to the controller 180. The user's voice may include, for example, a voice corresponding to a menu or a function of the display apparatus 100. A recommended recognition range of the microphone 161 may be about 4 m between the microphone 161 and the user's position, and may vary according to the user's voice tone and an ambient environment (e.g., a speaker sound or an ambient noise).

The microphone 161 may be integrated into or separated from the display apparatus 100. When the microphone 161 is separated from the display apparatus 100, the microphone 161 may be electrically connected to the display apparatus 100 through the communicator 150 or the input/output interface 170.

It will be understood by one of ordinary skill in the art that the microphone 161 may be omitted according to a performance and a structure of the display apparatus 100.

The camera 162 receives an image (e.g., continuous frames) corresponding to the user's motion including a gesture in a recognition range. For example, the recognition range of the camera 162 may be 0.1 mm to 5 mm between the camera 162 and the user's position. The user's motion may include, for example, a motion of the user's body part or region such as the user's face, facial expression, hand, fist, or finger. The camera 162 may convert the received image into an electrical signal and may output the electrical signal to the controller 180 under the control of the controller 180.

The controller 180 may select a menu displayed on the display apparatus 100 by using a result of motion recognition or may perform control corresponding to the result of motion recognition. For example, the controller 180 may adjust a channel, adjust a volume, or move an indicator. The camera 162 may include a lens (not show) and an image sensor (not shown). The camera 162 may support optical zooming or digital zooming by using a plurality of lenses and image processing. A recognition range of the camera 162 may be set to vary according to an angle of a camera and an ambient environment condition. When the camera 162 includes a plurality of cameras, the camera 162 may receive 3D still images or 3D moving images by using the plurality of cameras.

The camera 162 may be integrated into or separated from the display apparatus 100. When the camera 162 is separated from the display apparatus 100, a separate apparatus (not shown) including the camera 152 may be electrically connected to the display apparatus 100 through the communicator 150 or the input/output interface 170.

It will be understood by one of ordinary skill in the art that the camera 162 may be omitted according to a performance and a structure of the display apparatus 100.

The light receiver 163 receives an optical signal (including a control signal) that is received from the control apparatus 200 that is outside the light receiver 163 through a light window (not shown) or the like in a bezel of the display 115. The light receiver 163 may receive an optical signal corresponding to the user's input (e.g., a touch, a push, a touch gesture, a voice, or a motion) from the control apparatus 200. The control signal may be extracted from the received optical signal under the control of the controller 180.

According to an exemplary embodiment, the light receiver 163 may receive a signal corresponding to a pointing position of the control apparatus 200 and may transmit the signal to the controller 180. For example, when the user whose finger touches the touchpad 203 provided on the control apparatus 200 moves the control apparatus 200, the light receiver 163 may receive a signal corresponding to the movement of the control apparatus 200 and may transmit the signal to the controller 180.

According to an exemplary embodiment, the light receiver 163 may receive a signal indicating that a specific button provided on the control apparatus 200 is pressed and may transmit the signal to the controller 180. For example, when the user presses with his/her finger the touch pad 203 that is provided as a button on the control apparatus 200, the light receiver 163 may receive a signal indicating that the touchpad 203 is pressed and may transmit the signal to the controller 180. For example, the signal indicating that the touchpad 203 is pressed may be used to select one of items.

According to an exemplary embodiment, the light receiver 163 may receive a signal corresponding to an input of the direction key of the control apparatus 200 and may transmit the signal to the controller 180. For example, when the user presses a direction key button 204 that is provided on the control apparatus 200, the light receiver 163 may receive a signal indicating that the direction key button 204 is pressed and may transmit the signal to the controller 180.

According to an exemplary embodiment, when one end of an item list is displayed on an item area, the light receiver 163 may receive an input of the control apparatus 200 to move the item list to the one end. The input of the control apparatus 200 to move the item list to the one end includes an input of the direction key button 204. For example, when the far right of an item list is displayed on an item area, the input of the control apparatus 200 includes an input of the direction key button 204 to move the item list rightward, and when the far left of an item list is displayed on the item area, the input of the control apparatus 200 includes an input of the direction key button 204 to move the item list leftward.

The input/output interface 170 receives a video (e.g., a moving image), an audio (e.g., a voice or music), and additional information (e.g., an EPG) from the outside of the display apparatus 100 under the control of the controller 180. The input/output interface 170 may include one of a high-definition multimedia interface (HDMI) port 171, a component jack 172, a PC port 173, and a USB port 174. Alternatively, the input/output interface 170 may include a combination of the HDMI port 171, the component jack 172, the PC port 173, and the USB port 174.

It will be understood by one of ordinary skill in the art that the input/output interface 170 may be configured and operate in various ways.

The controller 180 controls an overall operation of the display apparatus 100 and signal transmission/reception between the elements 110 through 190 of the display apparatus 100, and processes data. When the user's input occurs or satisfies a condition that is preset and stored, the controller 180 may execute an operation system (OS) and various applications that are stored in the storage 190.

The controller 180 may include a random-access memory (RAM) 181 that stores a signal or data input from the outside of the display apparatus 100 or stores a signal or data related to various operations performed in the display apparatus 100, a read-only memory (ROM) 182 that stores a control program for controlling the display apparatus 100, and a processor 183.

The processor 183 may include a graphics processing unit (GPU) (not shown) for performing graphics processing on a video. The processor 183 may be provided as a system-on-chip (SoC) in which a core (not shown) is combined with a GPU (not shown). The processor 183 may include a single-core, a dual-core, a triple-core, a quad-core, and a multiple core thereof.

Also, the processor 183 may include a plurality of processors. For example, the processor 183 may include a main processor (not shown) and a sub- processor that operates in a sleep mode. A graphic processor 184 generates a screen including various objects such as an icon, an image, and text by using a calculator (not shown) and a renderer (not shown). The calculator calculates an attribute value such as a coordinate value, a shape, a size, or a color of each object according to a layout of the screen by using the user's interaction that is detected through the detector 160. The renderer generates the screen having any layout including the object based the attribute value that is calculated by the calculator. The screen generated by the renderer is displayed within a display area of the display 115.

According to an exemplary embodiment, the graphic processor 184 may generate the cursor 300 to be displayed on the screen in response to an input of the control apparatus 200, under the control of the controller 180.

According to an exemplary embodiment, the graphic processor 184 may generate an image of each item and a plurality of item areas under the control of the controller 180.

According to an exemplary embodiment, the graphic processor 184 may generate item lists in an open state and in a closed state under the control of the controller 180.

According to an exemplary embodiment, the graphic processor 184 may generate graphics that bounce an item list to the other end and then may move the item list to one end under the control of the controller 180.

According to an exemplary embodiment, when the item list is bounced to the other end and then is moved to the one end, the graphic processor 184 may apply a visual effect of continuously changing items included in the item list to the item list and may apply a visual effect by continuously changing at least one of sizes, colors, transparencies, and positions of the items, under the control of the controller 180.

First through nth interfaces 185-1 through 185-n are connected to the various elements. One of the first through nth interfaces 185-1 through 185-n may be a network interface that is connected to an external apparatus.

The RAM 181, the ROM 182, the processor 183, the graphic processor 184, and the first through nth interfaces 185-1 through 185-n may be connected to one another via an internal bus 186.

The term 'controller' of the display apparatus 100 used herein includes the processor 183, the ROM 182, and the RAM 181.

The controller 180 may receive pointing position information of the control apparatus 200 through at least one of the light receiver 163 that receives light that is output from the control apparatus 200 and a panel key (not shown) provided on a side surface or a rear surface of the display apparatus 100.

According to an exemplary embodiment, the controller 180 may control the display 115 to provide one or more item areas each of which displays at least some items of an item list that includes a plurality of items.

According to an exemplary embodiment, the controller 180 may control the display 115 to provide a plurality of item areas each of which displays at least one item, and to provide at least one item area of the plurality of item areas in a closed state and provide at least one item area of the plurality of item areas in an open state.

According to an exemplary embodiment, in response to an input of the control apparatus 200 that selects a closed item area, the controller 180 may control the display 115 to display at least some items of an item list corresponding to the closed item area on an open item area and to display at least some items of an item list corresponding to the open item area on the closed item area.

According to an exemplary embodiment, in response to an input of the control apparatus 200 that selects at least one item displayed on the open item area, the controller 180 may provide the selected item in an active state.

According to an exemplary embodiment, when one end of an item list is displayed on an item area, in response to an input of the control apparatus 200 to move the item list to the one end, the controller 180 may control the display 115 to bounce the item list to the other end and then move the item list to the one end and to display an item, which is arranged on the other end of the item list, on the other end of the item area.

According to an exemplary embodiment, when the item list is bounced to the other end and then is moved to the one end, the controller 180 may control the display 115 to continuously display the movement of the item list.

According to an exemplary embodiment, when the item list is bounced to the other end and then is moved to the one end, the controller 180 may control the display 115 to display the item list so that a visual effect of continuously changing items included in the item list is applied to the item list.

According to an exemplary embodiment, the controller 180 may apply a visual effect by continuously changing at least one of sizes, colors, transparencies, and positions of the items.

According to an exemplary embodiment, the controller 180 may apply a focus visual effect, which has been applied in order to indicate that an item arranged on the one end of the item list displayed on the item area is focused, to an item arranged on the other end of the item list as the item list is bounced and then is moved.

According to an exemplary embodiment, the controller 180 may provide a first item area and a second item area, and may control the display 115 to apply a focus visual effect, which has been applied in order to indicate that an item arranged on one end of the item list displayed on the second item area is focused, to an item displayed on the first item area as the item list is bounced and then is moved. Items of the first item area may not be activated, and items of the second item area may be activated.

According to an exemplary embodiment, the controller 180 may control the display 115 to display item lists corresponding to different categories on the first item area and the second item area.

It will be understood by one of ordinary skill in the art that the controller 180 may be configured and operate in various ways.

The storage 190 may store various data, programs, or applications for driving and controlling the display apparatus 100 under the control of the controller 180. The storage 190 may store signals or data that are input/output according to operations of the video processor 110, the display 115, the audio processor 120, the audio output interface 125, the power supply 130, the tuner 140, the communicator 150, the detector 160, and the input/output interface 170. The storage 190 may store a control program for controlling the display apparatus 100 and the controller 180, an application that is initially provided by a manufacturer or downloaded from the outside, a GUI related to the application, an object (e.g., an image, text, an icon, or a button) for providing the GUI, user information, a document, databases, or related data.

The term 'storage' according to an exemplary embodiment includes the storage 190, the ROM 182 or the RAM 181 of the controller 180, or a memory card (e.g., a micro secure digital (SD) card or a USB memory (not shown)) that is mounted in the display apparatus 100. Also, the storage 190 may include a nonvolatile memory, a volatile memory, a hard disk drive (HDD), or a solid-state drive (SSD).

The storage 190 may include a broadcast reception module, a channel control module, a volume control module, a communication control module, a voice recognition module, a motion recognition module, a light reception module, a display control module, an audio control module, an external input control module, a power control module, a power supply control module of an external apparatus that is connected through wireless communication (e.g., Bluetooth), a voice database (DB), or a motion DB. The modules and the DBs (not shown) of the storage 190 that are not shown) may be configured so as software for the display apparatus 100 to perform functions of broadcast reception control, channel control, volume control, communication control, voice recognition, motion recognition, light reception control, audio control, external input control, power control, and display control of controlling the cursor 300 or a scrolled item to be displayed. The controller 180 may perform each function by using the software that is stored in the storage 190.

According to an exemplary embodiment, the storage 190 may store user setting information that is received through one of the light receiver 163, the panel key (not shown), the microphone 161, and the camera 162. User setting may include the user setting information for setting categories corresponding to a plurality of item areas.

According to an exemplary embodiment, the storage 190 may store an image corresponding to each item.

According to an exemplary embodiment, the storage 190 may store an image of the cursor 300 that is output to correspond to a pointing position of the control apparatus 200.

According to an exemplary embodiment, the storage 190 may store a graphic image for providing a focus visual effect applied to items in response to an input of the direction key of the control apparatus 200.

The storage 190 may store a video or an image corresponding to a visual feedback.

The storage 190 may store a sound corresponding to an auditory feedback.

The storage 190 may include a presentation module. The presentation module is a module for configuring a display screen. The presentation module includes a multimedia module for reproducing and outputting multimedia content and an UI rendering module for performing UI and graphics processing. The multimedia module may include a player module, a camcorder module, and a sound processing module. Accordingly, the multimedia module may reproduce a variety of multimedia content and may generate and reproduce a screen and a sound. The UI rendering module may include an image composition module that combines images, a coordinate combination module that combines and generates coordinates on a screen on which an image is to be displayed, an X11 module that receives various events from hardware, and a two-dimensional/three-dimensional (2D/3D) UI toolkit that provides a tool for forming a 2D or 3D UI.

Also, the display apparatus 100 including the display 115 may be electrically connected to a separate external apparatus (e.g., a set-top box (not shown)) including a tuner. For example, it will be understood by one of ordinary skill in the art that the display apparatus 100 may be, but is not limited to, an analog TV, a digital TV, a 3D-TV, a smart TV, a light-emitting diode (LED TV), an organic light-emitting diode (OLED) TV, a plasma TV, or a monitor.

The display apparatus 100 may include a sensor (e.g., an illumination sensor or a temperature sensor (not shown)) that detects an internal or external state of the display apparatus 100.

At least one element may be added to or omitted from the elements (e.g., 110 through 190) of the display apparatus 100 of FIG. 3 according to a performance of the display apparatus 100. Also, it will be understood by one of ordinary skill in the art that positions of the elements (e.g., 110 through 190) may vary according to a performance or a structure of the display apparatus 100.

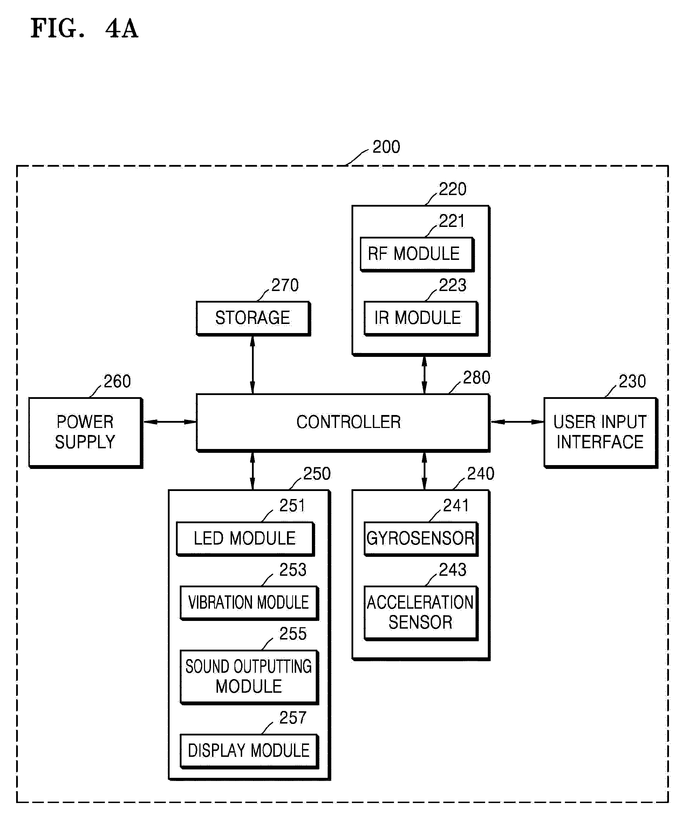

FIGS. 4A through 4B-c are block diagrams illustrating a configuration of the control apparatus 200 according to an exemplary embodiment.

Referring to FIG. 4A, the control apparatus 200 may include a wireless communicator 220, a user input interface 230, a sensor unit 240, an output unit 250, a power supply 260, a storage 270, and a controller 280.

The wireless communicator 220 may transmit/receive a signal to/from the display apparatus 100 according to the exemplary embodiments. The wireless communicator 220 may include a radio frequency (RF) module 221 that may transmit/receive a signal to/from the display apparatus 100 according to the RF communication standard. Also, the control apparatus 200 may include an infrared (IR) module that may transmit/receive a signal to/from the display apparatus 100 according to the IR communication standard.

In the present exemplary embodiment, the control apparatus 200 transmits a signal containing information about a movement of the control apparatus 200 to the display apparatus 100 through the RF module 221.

Also, the control apparatus 200 may receive a signal that is transmitted from the display apparatus 100 through the RF module 221. Also, if necessary, the control apparatus 200 may transmit a command to turn on/off power, change a channel, or change a volume to the display apparatus 100 through the IR module 223.

The user input interface 230 may include a keypad, a button, a touchpad, or a touch-screen.

The user may input a command related to the display apparatus 100 to the control apparatus 200 by manipulating the user input interface 230. When the user input interface 230 includes a hard key button, the user may input a command related to the display apparatus 100 to the control apparatus 200 by pushing the hard key button. When the user input interface 230 includes a touch-screen, the user may input a command related to the display apparatus 100 to the control apparatus 200 by touching a soft key of the touch-screen.

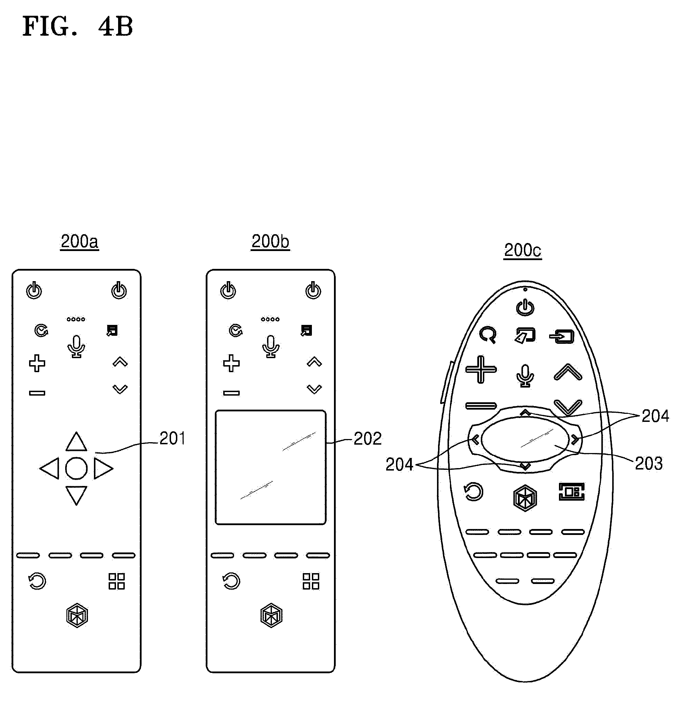

For example, the user input interface 230 may include a 4-direction button or a 4-direction key 201, like in a control apparatus 200a of FIG. 4B-a. The 4-direction button or the 4-direction key 201 may be used to control a window, an area, an application, or an item displayed on the display 115. The 4-direction button or the 4-direction key 201 may be used to order upward, downward, leftward, and rightward movements. Also, it will be understood by one of ordinary skill in the art that the user input interface 230 includes a 2-direction button or a 2-direction key, instead of the 4-direction button or the 4-direction key 201.

Also, the user input interface 230 may include any of various input units that may be manipulated by the user, such as a scroll key or a jog key.

Also, the user input interface 230 may include a touchpad 202, like in a control apparatus 200b of FIG. 4B-b. The user input interface 230 according to an exemplary embodiment may receive the user' input that drags, touches, or flips the touchpad 202 of the control apparatus 200. Also, the display apparatus 100 may be controlled according to a type of the received user's input (e.g., a direction in which a drag command is input or a time at which a touch command is input).

The sensor unit 240 may include a gyro sensor 241 or an acceleration sensor 243. The gyro sensor 241 may sense information about a movement of the control apparatus 200. For example, the gyro sensor 241 may sense information about an operation of the control apparatus 200 along x, y, and z-axes. The acceleration sensor 243 may sense information about a speed at which the control apparatus 200 moves. The sensor unit 240 may further include a distance measurement sensor, and thus may sense a distance between the sensor unit 240 and the display apparatus 100.

Referring to FIG. 4B-c, the control apparatus 200c according to an exemplary embodiment may be a pointing device including both a 4-direction key 204 and a touchpad 203. That is, when the control apparatus 200 is a pointing device, a function of the display apparatus 100 may be controlled according to an inclination direction or an angle by using the gyro sensor 241 of the control apparatus 200.

According to an exemplary embodiment, a selection signal of the 4-direction key 204 may be used to apply a focus visual effect, which has been applied to an item displayed on an item area provided on the display 115, to another item.

According to an exemplary embodiment, a contact signal of the touchpad 203 may be used to control a movement of the cursor 300 provided on the display 125.

According to an exemplary embodiment, a button pressure signal of the touchpad 203 that is provided as a button may be used to select items displayed on the display 115.

The output unit 250 may output an image or a voice signal in response to or a manipulation of the user input interface 230 or a signal that is received from the display apparatus 100. The user may recognize whether the user input interface 230 is manipulated or the display apparatus 100 is controlled, by using the output unit 250.

For example, the output unit 250 may include an LED module 251 that is turned on, a vibration module 253 that generates vibration, a sound output module 255 that outputs a sound, or a display module 257 that outputs an image when the user input interface 230 is manipulated or a signal is transmitted/received to/from the display apparatus 100 through the wireless communicator 220.

The power supply 260 supplies power to the control apparatus 200. When the control apparatus 200 is not moved for a predetermined period of time, the power supply 260 may cut off power supply to reduce power consumption. When a predetermined key that is provided on the control apparatus 200 is manipulated, the power supply 260 may resume power supply.

The storage 270 may store various programs and application data that are necessary to control or operate the control apparatus 200.

The controller 280 controls general operations related to the control apparatus 200. The controller 280 may transmit a signal corresponding to a movement of the control apparatus 200 that is sensed by the sensor unit 240 or a signal corresponding to a manipulation of a predetermined key of the user input interface 230, to the display apparatus 100 through the wireless communicator 220.

The display apparatus 100 may include a coordinate value calculation unit (not shown) that may calculate a coordinate value of the cursor 300 corresponding to an operation of the control apparatus 200.

The coordinate value calculation unit may correct hand-shake or an error from a signal corresponding to the operation of the control apparatus 200 that is detected and may calculate a coordinate value (x, y) of the cursor 300 to be displayed on the display 115.

Also, a transmission signal of the control apparatus 200 that is detected through the detector 130 is transmitted to the controller 180 of the display apparatus 100. The controller 180 may distinguish information about an operation of the control apparatus 200 and a key manipulation from the signal that is transmitted from the control apparatus 200, and may control the display apparatus 100 according to the information.

Alternatively, the control apparatus 200 may calculate a coordinate value of the cursor 300 corresponding to an operation of the control apparatus 200 and may transmit the coordinate value to the display apparatus 100. In this case, the display apparatus 100 may transmit information about the coordinate value of the cursor 300 that is received without correction of hand-shake or an error to the controller 180.

According to an exemplary embodiment, the user may control a position of the cursor 300 to be displayed on the screen of the display 115 by using a direction key, a touchpad, and a pointing function of the control apparatus 200.

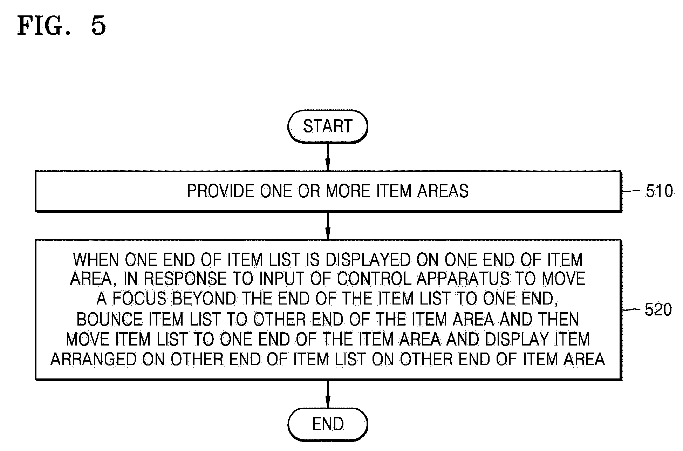

FIG. 5 is a flowchart of a display method of the display apparatus 100 according to an exemplary embodiment.

Referring to FIG. 5, in operation 510, the display apparatus 100 provides one or more item areas.

The term 'item area' refers to an area for displaying at least some items of an item list that includes a plurality of items.

The display apparatus 100 may provide item areas as shown in, for example, FIGS. 1A through 1I. However, it will be understood by one of ordinary skill in the art that FIGS. 1A through 1I are exemplary and the number of item areas and an arrangement of the item areas on the screen may be set in various ways.

Referring back to FIG. 5, in operation 520, when one end of an item list is displayed on an item area, in response to an input of the control apparatus 200 to move the item list to the one end, the display apparatus 100 may bounce the item list to the other end and then move the item list to the one end and may display an item, which is arranged on the other end of the item list, on the other end of the item area.

When one end of an item list is displayed on an item area and the direction key of the control apparatus 200 is pressed by the user as shown in FIG. 4B-a, 4B-b, or 4B-c, the detector 160 receives an input signal corresponding to the pressed direction key of the control apparatus 200.

In response to the received input signal of the direction key, the controller 180 controls the display 115 to bounce the item list to the other end and then move the item list to the one end and to display an item, which is arranged on the other end of the item list, on the other end of the item area. When an item list is bounced, it means that when one end of the item list is displayed on an item area, in response to an input of the direction key to move the item list to the one end received from the control apparatus 200, the item list is moved to the other end and then is returned to the one end.

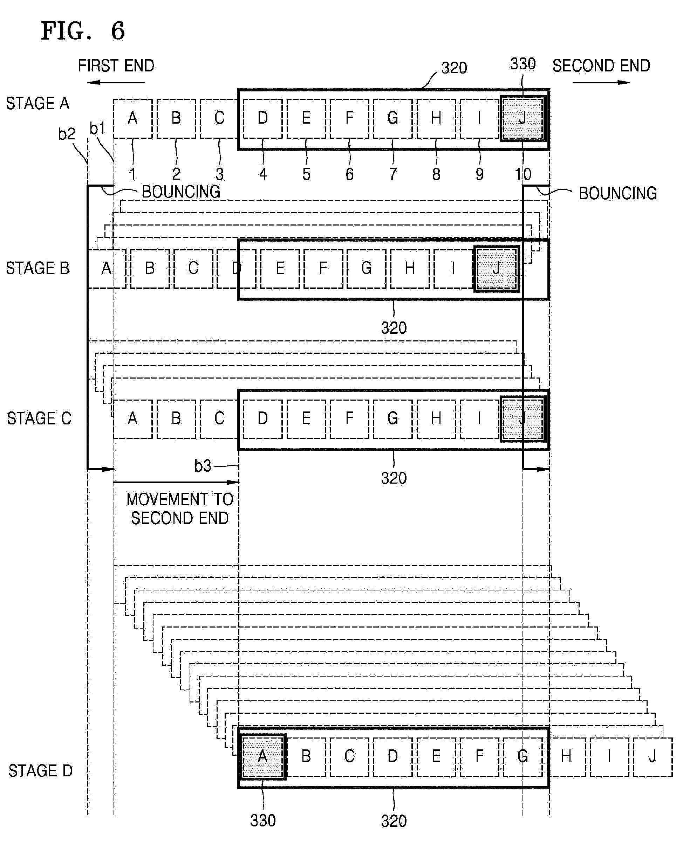

FIGS. 6-a through 6-d are reference views for explaining a method of, when one end of an item list is displayed on an item area, bouncing the item list to the other end and then moving the item list to the one end according to an exemplary embodiment.

Referring to FIG. 6-a, the items D 4, E 5, F 6, G 7, H 8, I 9, and J 10 in an item list including the items A 1, B 2, C 3, D 4, E 5, F 6, G 7, H 8, I 9, and J 10 are displayed on the open item area 320 and one end of the item list is displayed on the open item area 320.

Also, in order to indicate that the item J 10 is focused, a focus visual effect is applied to the item J 10. In this state, when an input of the direction key to move the item list to the one end is received from the control apparatus 200, the display apparatus 100 bounces the item list to the other end in response to the input of the direction key.

Referring to FIGS. 6-b, 6-c, and 6-d, the display apparatus 100 may perform bouncing by moving the item list from a point b1 that is a start point of the bouncing to a point b2 and moving again the item list from the point b2 to the point b1, and then may move the item list from the point b1 to a point b3 toward the one end, and may display the other end of the item list, where the item list starts, on the open item area 320.

Referring to FIG. 6-b, when the item list is moved from the point b1 that is a start point of the bouncing to the point b2, the display apparatus 100 may continuously output the movement of the item list to the display 115. Referring to FIG. 6-b, when the bouncing is at the maximum, a head of the item list reaches the point b2.

Referring to FIG. 6-c, after the head of the item list reaches the point b2, when the display apparatus 100 bounces the item list by moving the item list from the point b2 to the point b1, the display apparatus 100 may continuously output the movement of the item list to the display 115. Referring to FIG. 6-d, after the head of the item list is located at the point b1, the display apparatus 100 moves the item list to the point b3 to complete the movement of the item list, the head of the item list reaches the point b3, and items beginning from the item A1 that is an item on the other end of the item list are displayed on the open item area 320.

According to an exemplary embodiment, the display apparatus 100 may not linearly move the item list, and may move the item list in a predefined curved shape.

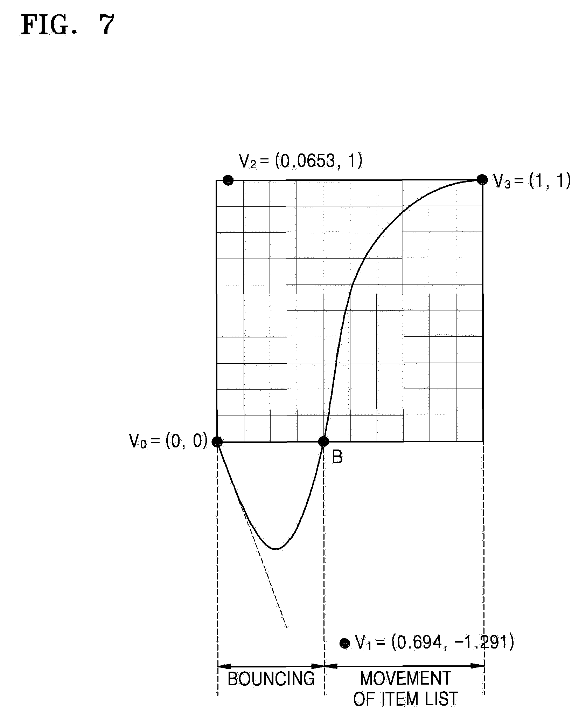

FIG. 7 shows a curve that may be used to continuously change a movement of an item list according to an exemplary embodiment.

The curve of FIG. 7 is a Bézier curve. A Bézier curve is a parametric curve frequently used in computer graphics. The Bézier curve is used to obtain various free curves by moving a start point that is a first control point, an end point that is a last control point, and intermediate control points between the start point and the end point. For example, when there are four points P₀, P₁, P₂, and P₃, a curve starts at the point P₀ going toward the point P₁ and arrives at the point P₃ coming from a direction of the point P₂ without passing through the point P₁ or P₂.

Referring to FIG. 7, the curve starts at a start point V₀ (0, 0) and arrives at an end point V₃ (1, 1). In the curve that is obtained by a control point V₁ (0.694, -1.291) and a control point V₂ (0.0653, 1), calculation may be performed by mapping 0 on a y-axis to a head position of an item list during bouncing of the item list and mapping 1 on the y-axis to a head position of the item list when a movement of the item list is completed. That is, a y-axis value of the curve of FIG. 7 may be used as a head position HeadPos of the item list. An x-axis of the curve of FIG. 7 is mapped to a total time for which the item list is moved.

An interval of the curve of FIG. 7 between the start point V₀ and a point X during which the y-axis value is reduced from the start point V₀ to a lowest value and is increased again to a value of 0 at the point X corresponds to an interval during which the item list of FIGS. 6-a through 6-d is bounced by being moved b1->b2->b1.

An interval of the curve of FIG. 7 between the point X and the end point V₃ corresponds to an interval during which the item list of FIGS. 6-a through 6-d is moved b1->b3.

According to an exemplary embodiment, the display apparatus 100 may determine positions of items included in the item list by using a HeadPos value in the curve of FIG. 7.

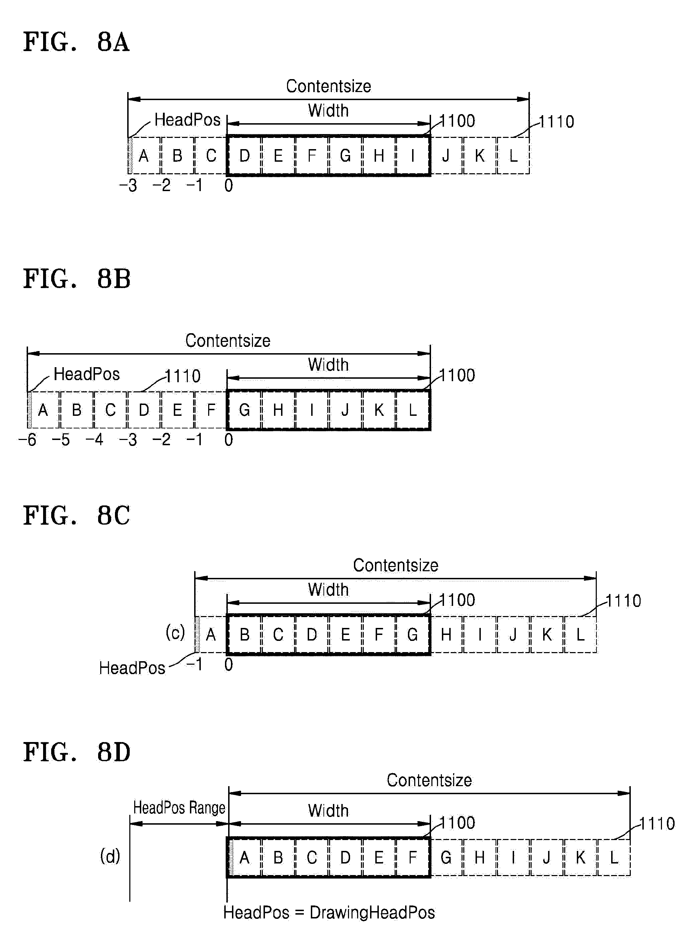

FIGS. 8-a through 8-d are reference views for explaining a detailed method of moving and outputting an item according to a HeadPos distance according to an exemplary embodiment.

FIG. 8-a illustrates an item area 1100 that displays items and an item list 1110 that includes a plurality of items. The item list 1110 includes 9 items A, B, C, D, E, F, G, H, I, J, K, and L. The item area 1100 may display 6 items, and the items D trough I are displayed on the item area 1100 in FIG. 8-a. The user may scroll the item area 1100 leftward to further display the items A, B, and C, which are arranged at the left of the item D and are not shown, on the item area 1100.

Also, the user may the item area 1100 rightward by using the control apparatus 200 to further display the items J, K, and L, which are arranged at the right of the item I and are not shown, on the item area 1100. A length of the item list 1110 that is a sum of widths of all items is denoted by Contentsize and a length of the item area 1100 is denoted by Width.

HeadPos denotes a head position of the item list 1100. When a left boundary of the item area 1100 is 0 and a length of one item is 1, the head position HeadPos in FIG. 8-a is -3.

Referring to FIG. 8-b, due to rightward scrolling using the control apparatus 200 in FIG. 8-a, 6 items ranging from the item G to the item L that are rightmost items of the item list are displayed on the item area 1100. The head position HeadPos in FIG. 8-b is -6.

Referring to FIG. 8-c, due to leftward scrolling using the control apparatus 200 in FIG. 8-b, 6 items ranging from the item B to the item G that are left items of the item list are displayed on the item area 1100. The head position HeadPos in FIG. 8-c is -1.

Referring to FIG. 8-d, due to leftward scrolling using the control apparatus 200 in FIG. 8-c, 6 items ranging from the item A to the item F that are leftmost items of the item list are displayed on the item area 1100. The head position HeadPos of the item list in FIG. 8-d is 0 which is the same as the left boundary of the item area 1100.

The head position HeadPos has a value of - Contentsize + Width to a size of 0.

In detail, when the item list of FIG. 8-b is scrolled rightward to the far right and 6 items that are rightmost items are included in the item area 1100, the head position HeadPos has a minimum value. In this case, the HeadPos value is - Contentsize + Width. A maximum value of the head position HeadPos is obtained in a case of FIG. 8-d, that is, when the item list is scrolled leftward to the far left and 6 items that are leftmost items of the item list are included in the item area 1100. In this case, the HeadPos value is 0 which is a maximum value of the head position HeadPos. Accordingly, the head position HeadPos may have a value ranging from - Contentisze + Width to 0 during general scrolling.

Also, the head position HeadPos in FIG. 8-d is the same as a position DrawingHeadPos at which drawing starts on the display 115.

A value of the position DrawingHeadPos may be obtained by using the following equation:

```
 if (headPos<-contentSize+width) {// when the far right of the item list is displayed and the
 direction key to move the item list rightward is pressed}
 t=(-contentSize+width-HeadPos)/width;
 return -contentSize+width-MOVELIMIT*interp(t)
 }
 else if (headPos>0) { // when the far left of the item list is displayed
and the direction key to
 move the item list leftward is pressed
 t=HeadPos/width;
 return MOVELIMIT*interp(t)
```

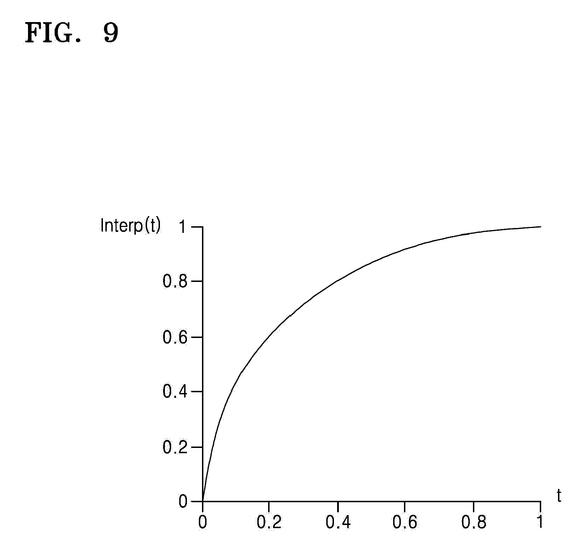

In the equation, MOVELIMIT denotes a constant value corresponding to a maximum distance by which the item list may be moved from an end, and Interp denotes an interpolation curve having a slope that decreases as the interpolation curve gets closer to 1 as shown in FIG. 9.

For example, when the far left of the item list is displayed and an input of the direction key to move the item list leftward is received, t is a value proportional to the head position HeadPos and Interp(t) is an interpolation curve having a slope that decreases as the interpolation curve gets closer to 1.

When the far left of the item list is matched to the left boundary of the item area and an input of the direction key to move the item list leftward is received, the HeadPos value varies according to the curve of FIG. 7. As the head position HeadPos decreases, the value t that is proportional to the head position HeadPos also decreases. Referring to FIG. 9, when the value t is small, the interpolation curve Interp(t) has a relatively sharp slope, and thus DrawingHeadPos= MOVELIMIT*interp(t) and a sharp slope is resulted in.

When the far left of the item list is matched to the left boundary of the item area and an input of the direction key to move the item list leftward is received, the HeadPos value varies according to the curve of FIG. 7. As the head position HeadPos increases, the value t that is proportional to the head position HeadPos increases. Referring to FIG. 9, when the value t is large, the interpolation curve Interp(t) has a relatively moderate slope, and thus DrawingHeadPos= MOVELIMIT*interp(t) and a moderate slope is resulted in.

Accordingly, when the HeadPos value according to the curve of FIG. 7 is small, the amount of change in the position DrawingHeadPos is large, and when the HeadPos value is large, the amount of change in the position DrawingHeadPos is small. Accordingly, the user feels that a resisting force increases.

According to an exemplary embodiment, the display apparatus 100 may display an item list so that a visual effect is applied to items included in the item list according to a distance by which the item list is moved during bouncing of the item list.

According to an exemplary embodiment, the display apparatus 100 may display the item list so that a visual effect is continuously applied to the items included in the item list during the bouncing of the item list.

The visual effect applied to the items includes an effect of changing sizes of the items. The effect of changing of the sizes includes an effect of changing heights or widths of the items.

The visual effect applied to the items includes an effect of changing colors of the items.

The visual effect applied to the items includes an effect of changing transparencies of the items.

The visual effect applied to the items includes an effect of changing positions of the items.

According to an exemplary embodiment, the display apparatus 100 may deform the items included in the item list according to a distance by which the item list is moved during the bouncing of the item list. The display apparatus 100 may display the item list so that the items are continuously deformed.

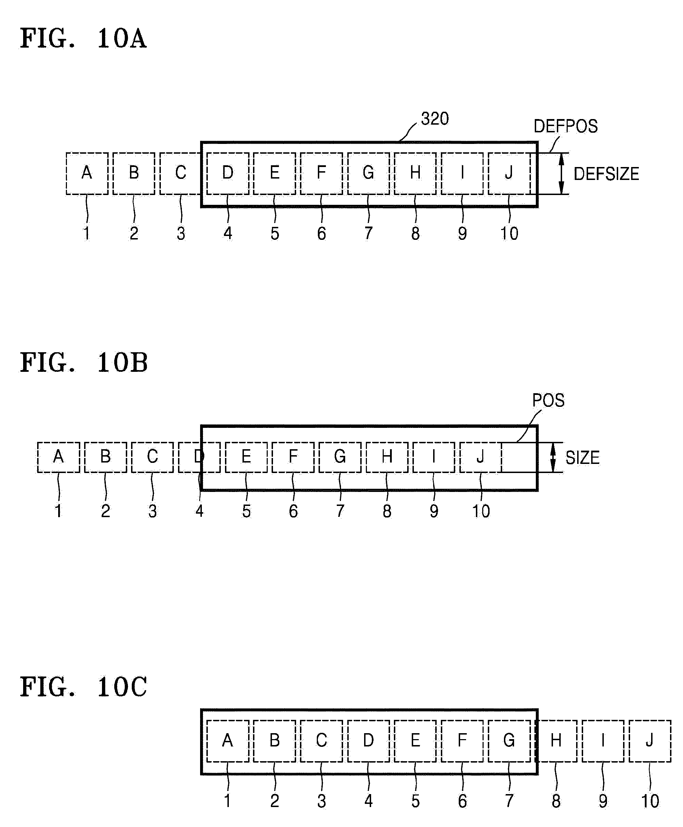

FIGS. 10-a through 10-c are reference views for explaining the amount of deformation in an item.

Referring to FIG. 10-a, a default height of an item (referred to as an un-deformed item) before being deformed is denoted by DEFSIZE. Referring to FIG. 10-b, a height of the item (referred to as a deformed item) after being deformed is denoted by SIZE. Also, a y-axis position of the un-deformed item in a default state is denoted by DEFPOS and a y-axis position of the deformed item is denoted by POS. DEFORMLIMIT denotes a maximum amount of deformation in an item. Referring to FIGS. 10-a, 10-b, and 10-c, an item may be deformed during a bouncing operation of an item list according to an exemplary embodiment.

A height and a position of a deformed item according to an exemplary embodiment may be calculated as follows.

The head position HeadPos may be calculated by using a y-axis value of the curve of FIG. 7, and in this case, considering that an item is deformed during a bouncing operation of an item list according to an exemplary embodiment, the HeadPos value may be calculated by using a y-axis value in an interval for bouncing in the curve of FIG. 7.

### DEFSIZE=100

### DEFORMLIMIT=0.8

```
 if (headpos<-contentSize+width) {// when the far right of an item list
is displayed and an input of
 the direction key to move the item list rightward is received
 t=(-contentSize+width-HeadPos)/width; // t is calculated
 }
 else if (headPos>0) { // when the far left of the item list is displayed
and an input of the direction
 key to move the item list leftward is received
 t=HeadPos/width; //t is calculated
 }
 size=DEFSIZE*lerp(1,DEFORMLIMIT,interp(t));//size is calculated
 pos=DEFPOS+(DEFAULTSIZE-size)/2 //Pos is calculated.
```

In the equation, lerp() is a linear interpolation function and lerp(a,b,t)=a+t(b-a). The linear interpolation function lerp() that returns a value between 'a' and ' b' by 't' is used to gently change from one value to another value.

Accordingly, lerp(1,DEFORMLIMIT,interp(t)) returns a value in interp(t) in order to change from 0 to DEFORMLIMIT.

Accordingly, the height SIZE that is a height of a deformed item may be changed from 1 to 0.8 (that is set as DEFORMLIMIT) when a default size is 100, and may be gently changed by using lerp(1,DEFORMLIMIT,interp(t)).

FIG. 9 shows an interpolation curve Interp(t).

The interpolation curve Interp(t) is an interpolation curve having a slope that decreases as the interpolation curve gets closer to 1.

In the present exemplary embodiment, t is a value proportional to the head position HeadPos.

For example, when the far left of an item list is matched to a left boundary of an item area and an input of the direction key to move the item list leftward is received, the HeadPos value is changed as shown in FIG. 7. When the HeadPos value is small, the value t that is proportional to the head position HeadPos is also small. Referring to FIG. 9, when the value t is small, since the interpolation curve Interp(t) has a relatively sharp slope and lerp(1,DEFORMLIMIT,interp(t))=1+ interp(t) (DEFORMLIMIT-1), lerp is relatively sharply changed.

Also, when the HeadPos value is large, the value t that is proportional to the head position HeadPos is also large. Referring to FIG. 9, when the value t is large, since the interpolation curce Interp(t) has a relatively moderate slope and lerp(1,DEFORMLIMIT,interp(t)) = 1+ interp(t) (DEFORMLIMIT-1), lerp is relatively moderately changed.

When the head position HeadPos is large, that is, when the head position HeadPos is near to 0 in FIG. 7 and the item list begins to be moved from the point b1 in FIG. 6-a, the amount of change in Size that is a height of the item is small.

Accordingly, when the head position HeadPos is small, that is, when the HeadPos value is a lowest value in FIG. 7, that is, when the item list is near to the point b2 in FIG. 6-b, that is, when the movement of the item list is at the maximum during bouncing, the amount of change in Size that is the height of the item is large.

In short, during bouncing of an item list, the amount of deformation in an item gradually increases from when the bouncing begins to occur to when the item list reaches a bouncing maximum distance, and the amount of deformation in the item gradually decreases from when the item list reaches the bouncing maximum distance to when the bouncing is completed. According to an exemplary embodiment, the display apparatus 100 may display an item list so that a focus visual effect indicating that an item displayed on the closed item area 310 is focused is applied to the item.

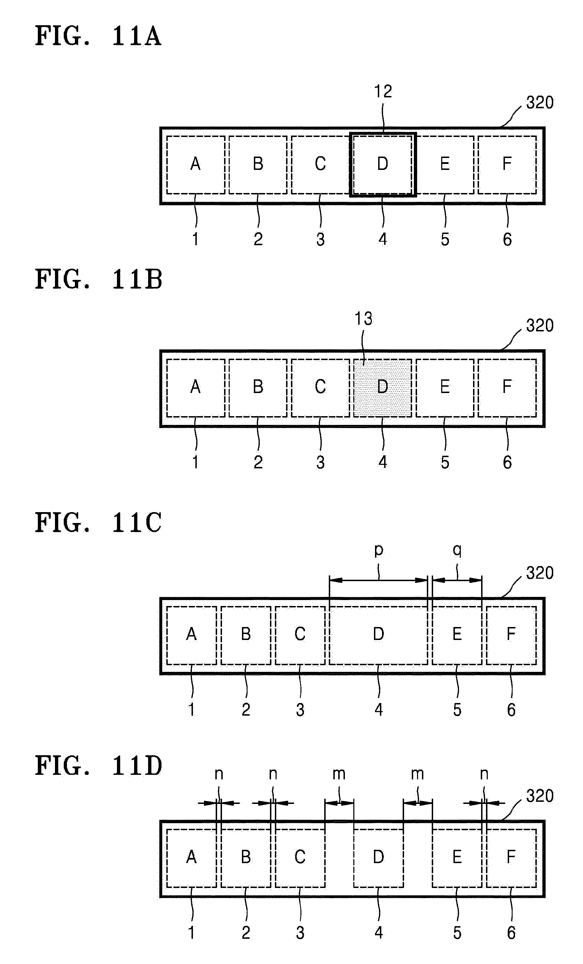

FIGS. 11-a through 11-d are views for explaining a focus visual effect according to various exemplary embodiments.

Referring to FIG. 11-a, the focus visual effect according to an exemplary embodiment may include an effect of surrounding an edge 12 of a focused item with a thick heavy line.

Referring to FIG. 11-b, the focus visual effect according to an exemplary embodiment may include an effect of making different a color 13 or a transparency of the focused item.

Referring to FIG. 11-c, the focus visual effect according to an exemplary embodiment may include an effect of making different a size of the focused item. Widths of items of the open item list 320 may be each q whereas a width of the focused item may be p in FIG. 11-c.

Referring to FIG. 11-d, the focus visual effect according to an exemplary embodiment may include an effect of making the focused item have a greater interval than other items. An interval between other items in the item list is n whereas an interval between the focused item and an item adjacent to the focused item is m in FIG. 11-d. In FIG. 11-d, it may be indicated that the item D 4 is focused.

According to an exemplary embodiment, the display apparatus 100 may provide a plurality of item areas, and may provide at least one of the plurality of item areas as a closed item area and at least one of the plurality of item areas as an open item area. Items may not be activated on the closed item area and small images of a small number of items may be displayed on the closed item area. Items may be scrolled or activated on the open item area.

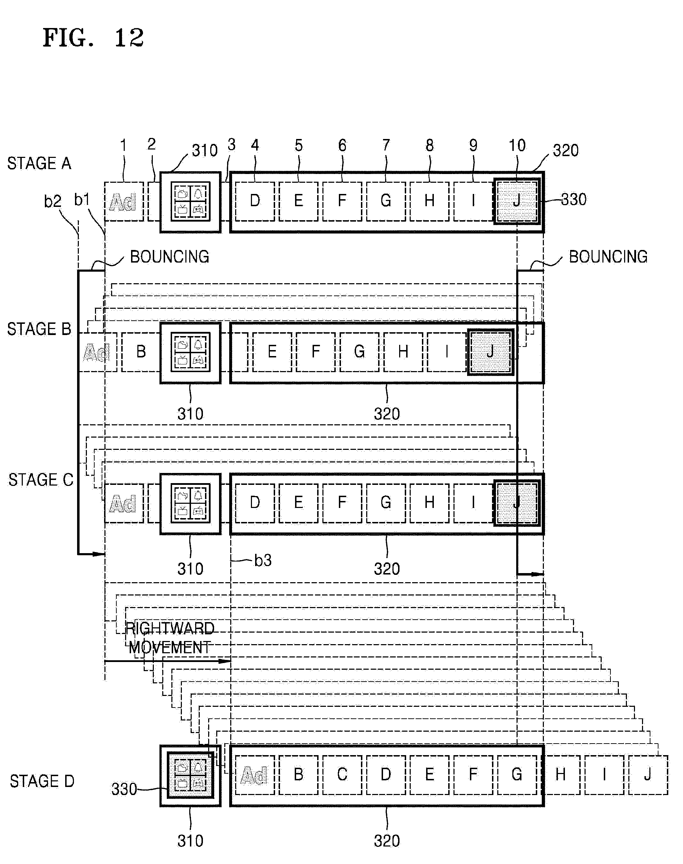

In the display apparatus 100 that provides the open item area and the closed item area, the bouncing and movement of an item list when one end of the item list is displayed on the open item area and an input of the direction key to move to the one end is received will be explained with reference to FIGS. 12-a through 13-d.

FIGS. 12-a through 12-d are reference views for explaining an operation performed by the display apparatus 100 that provides an open item area and a closed item area to, when the far right of an item list is displayed on the open item area and an input of the direction key to move the item list rightward is received, bounce and move the item list according to an exemplary embodiment.

Referring to FIG. 12-a, the display apparatus 100 provides the closed item area 310 and the open item area 320.

Images of items included in an item list corresponding to the closed item area 310 may be displayed. An image of one item may be displayed or small images of a plurality of items may be gathered and displayed as shown in FIG. 12-a.

The items D 4, E 5, F 6, G 7, H 8, I 9, and J 10 in an item list including the items Ad 1, B 2, C 3, D 4, E 5, F 6, G 7, H 8, I 9, and J 10 are displayed on the open item area 320 and the far right of the item list is displayed on the open item area 320.

The item Ad 1 that is an advertisement item may not have an attribute that is common to the other items, that is, B 2, C 3, D 4, E 5, F 6, G 7, H 8, I 9, and J 10 corresponding to the open item area 320. The advertisement item may include an advertisement item desired by a service provider. An item for a specific purpose may be provided at a first position of the item list. The item for the specific purpose may be not only the advertisement item but also an item desired by the service provider, an item desired by a manufacturer of the display apparatus 100, or an item desired by the user.

Referring to FIG. 12-a, in order to indicate that the item J 10 is focused, a focus visual effect is applied to the item J 10. In this state, when an input of the direction key to move the item list rightward is received from the control apparatus 200, the display apparatus 100 bounces the item list leftward in response to the input of the direction key.

Referring to FIGS. 12-b, 12-c, and 12-d, the display apparatus 100 may perform bouncing by moving the item list from a point b1 that is a start point of the bouncing to a point b2 and then moving the item list from the point b2 to the point b1, and then may move the item list from the point b1 to a point b3 toward one end, and may display the far left of the item list, where the item list starts, on the open item area 320.

Referring to FIG. 12-b, when the item list is moved from the point b1 that is a start point of the bouncing to the point b2, the display apparatus 100 may continuously output the movement of the item list to the display 115. When the bouncing is at the maximum, a head of the item list reaches the point b2.

Referring to FIG. 12-c, after the head of the item list reaches the point b2, when the display apparatus 100 bounces the item list by moving the item list from the point b2 to the point b1, the display apparatus 100 may continuously output the movement of the item list to the display 115. Referring to FIG. 12-d, after the head of the item list is located at the point b1, the display apparatus 100 moves the item list rightward to the point b3, and items beginning from the item Ad 1 that is a leftmost item of the item list are displayed on the open item area 320.

Also, the focus visual effect 330 indicating that an item is focused may be applied to an item displayed on the closed item area 310.

As such, a focus visual effect of an item that is focused after an item list is bounced fades out in a direction of an input of the direction key, and is moved on the screen in the opposite direction and fades in when a movement of the item list is completed. Accordingly, even when a length of an item list is so great that the user's eyes fail to follow, the user may feel as if the item list is circulated.

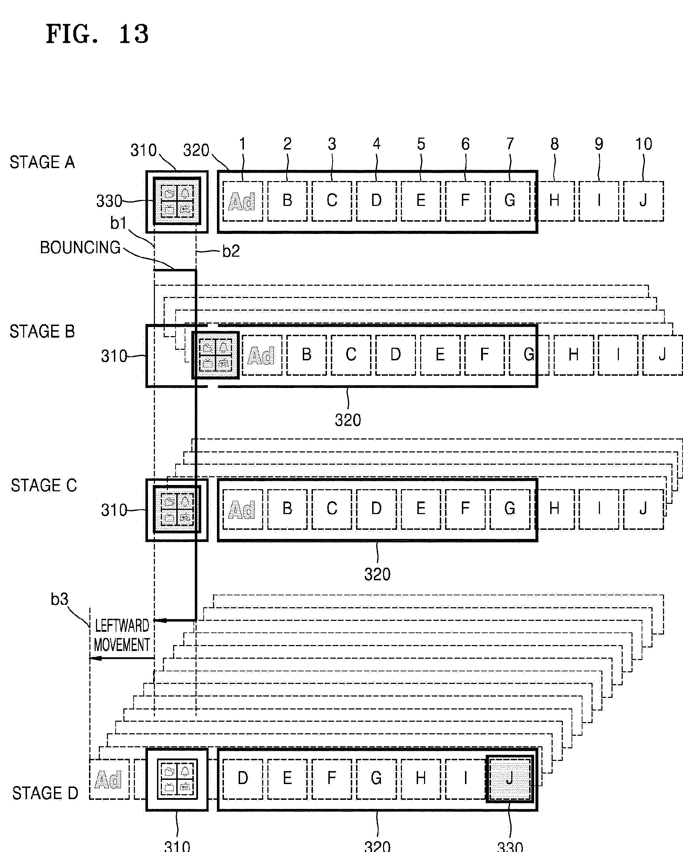

FIGS. 13-a through 13-d are reference views for explaining an operation performed by the display apparatus 100 that provides the open item area 320 and the closed item area 310 to bounce and move an item list when the closed item area 310 is focused and an input of the direction key to move the item list leftward is received according to an exemplary embodiment.

Referring to FIG. 13-a, the items Ad 1, B 2, C 3, D 4, E 5, F 6, G 7 of the item list including the items Ad 1, B 2, C 3, D 4, E 5, F 6, G 7, H 8, I 9, and J 10 are displayed on the open item area 320 and the far left of the item list is displayed on the open item area 320.

Also, in order to indicate that an item 311 of the closed item area 310 is focused, a focus visual effect is applied to the item 311. In this state, when an input of the direction key to move the item list leftward is received from the control apparatus 200, the display apparatus 100 bounces the item list rightward in response to the input of the direction key.

Referring to FIGS. 13-b, 13-c, and 13-d, the display apparatus 100 may perform bouncing by moving the item list from a point b1 that is a start point of the bouncing to a point b2 and then moving again the item list from the point b2 to the point b1, and then may move the item list from the point b1 to a point b3 leftward, and may display the far right of the item list, which is an end of the item list, on the open item area 320.

Referring to FIG. 13-b, when the item list is moved from the point b1 that is a start point of the bouncing to the point b2, the display apparatus 100 may continuously output the movement of the item list to the display 115. Referring to FIG. 13-b, when the bouncing is at the maximum, an end of the item list reaches the point b2.

Referring to FIG. 13-c, after the end of the item list reaches the point b2, when the display apparatus 100 bounces the item list by moving the item list from the point b2 to the point b1, the display apparatus 100 may continuously output the movement of the item list to the display 115.

Referring to FIG. 13-d, when a head of the item list is moved to the point b3 to complete the movement of the item list, the head of the item list reaches the point b3 and the item J 10 that is a rightmost item of the item list is displayed on the open item area 320.

Also, the focus visual effect 330 indicating that an item is focused may be applied to the item J 10 that is a rightmost item among items displayed on the open item area 320.

As such, a focus visual effect of an item that is focused after an item list is bounced fades out in a direction of an input of the direction key, and is moved on the screen in the opposite direction and fades in when a movement of the item list is completed. Accordingly, even when a length of an item list is so great that the user's eyes fail to follow, the user may feel as if the item list is circulated.

According to the one or more exemplary embodiments, since a shape of a cursor or a shape of an item that is scrolled is changed when edge scrolling is performed, a user may naturally and pleasantly recognize that the user reaches an end of a list.

A display method according to the one or more exemplary embodiments may be implemented as computer instructions which may be executed by various computer means, and recorded on a computer-readable recording medium. The computer-readable recording medium may include program commands, data files, data structures, or a combination thereof. The program commands recorded on the computer-readable recording medium may be specially designed and constructed for the inventive concept or may be known to and usable by one of ordinary skill in a field of computer software. Examples of the computer-readable medium include storage media such as magnetic media (e.g., hard discs, floppy discs, or magnetic tapes), optical media (e.g., compact disc-read only memories (CD-ROMs), or digital versatile discs (DVDs)), magneto-optical media (e.g., floptical discs), and hardware devices that are specially configured to store and carry out program commands (e.g., ROMs, RAMs, or flash memories). Examples of the program commands include a high-level language code that may be executed by a computer using an interpreter as well as a machine language code made by a complier. While the inventive concept has been particularly shown and described with reference to exemplary embodiments thereof by using specific terms, the embodiments and terms have merely been used to explain the inventive concept and should not be construed as limiting the scope of the inventive concept as defined by the claims. The exemplary embodiments should be considered in a descriptive sense only and not for purposes of limitation. Therefore, the scope of the inventive concept is defined not by the detailed description of the inventive concept but by the appended claims, and all differences within the scope will be construed as being included in the inventive concept.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display configured to provide one or more item areas each of which displays at least some items of an item list that comprises a plurality of items; and
a controller that, when one end of an item list is displayed on one end of an item area, in response to an input of a control apparatus to move a focus beyond the end of the item list, is configured to control the display to bounce the item list to the other end of the item area and then move the item list to the one end of the item area, and to display an item, which is arranged on the other end of the item list, on the other end of the item area.

2. The display apparatus of claim 1, wherein when the item list is bounced to the other end and then is moved to the one end of the item area, the controller is configured to control the display to continuously display the movement of the item list.

3. The display apparatus of claim 1, wherein when the item list is bounced to the other end and then is moved to the one end, the controller is configured to control the display to display the item list so that a visual effect of continuously changing items included in the item list is applied to the item list.

4. The display apparatus of claim 3, wherein the controller is configured to apply the visual effect by continuously changing at least one of sizes, colors, transparencies, and positions of the items.

5. The display apparatus of claim 1, wherein the controller is configured to apply a focus visual effect, which has been applied in order to indicate that an item arranged on the one end of the item list displayed on the item area is focused, to an item arranged on the other end of the item list.

6. The display apparatus of claim 1, wherein the display is configured to provide a first item area and a second item area, and
when one end of an item list is displayed on one end of the second item area that is not adjacent to the first item area, in response to an input of the control apparatus to move a focus beyond the one end of the item list, the controller is configured to control the display to bounce the item list to the other end of the second item area and then move the item list to the one end of the second item area, and to display an item, which is arranged on the other end of the item list, on the other end of the second item area.

7. The display apparatus of claim 6, wherein the controller is configured to apply a focus visual effect, which has been applied in order to indicate that an item arranged on the one end of the item list displayed on the second item area is focused, to an item displayed on the first item area as the item list is bounced and then is moved.

8. The display apparatus of claim 6, wherein the controller is configured to control the display to display item lists corresponding to different categories on the first item area and the second item area.

9. The display apparatus of claim 6, wherein items of the first item area are not activatable and items of the second item area are activatable.

10. A display method comprising:
providing one or more item areas each of which displays at least some items of an item list that comprises a plurality of items; and
when one end of an item list is displayed on one end of an item area, in response to an input of a control apparatus to move a focus beyond the end of the item list, bouncing the item list to the other end of the item area and then moving the item list to the one end of the item area, and displaying an item, which is arranged on the other end of the item list, on the other end of the item area.

11. The display method of claim 10, wherein the bouncing of the item list to the other end and then moving of the item list to the one end further comprises continuously displaying the movement of the item list.

12. The display method of claim 10, wherein the bouncing of the item list to the other end and then moving of the item list to the one end further comprises displaying the item list so that a visual effect of continuously changing items included in the item list is applied to the item list.

13. The display method of claim 12, further comprising applying the visual effect by continuously changing at least one of sizes, colors, transparencies, and positions of the items.

14. The display method of claim 10, further comprising applying a focus visual effect, which has been applied in order to indicate that an item arranged on the one end of the item list displayed on the item area is focused, to an item arranged on the other end of the item list as the item list is bounced and then is moved.

15. A non-transitory computer-readable recording medium having embodied thereon a program for executing a display method,
wherein the display method comprises:
providing one or more item areas each of which displays at least some items of an item list that comprises a plurality of items; and
when one end of an item list is displayed on one end of an item area, in response to an input of a control apparatus to move a focus beyond the end of the item list, bouncing the item list to the other end of the item area and then moving the item list to the one end of the item area, and displaying an item, which is arranged on the other end of the item list, on the other end of the second item area.
